(19) Europäisches Patentamt
European Patent Office
Office européen des brevets

(11) EP 0 615 534 B1

(12) # EUROPEAN PATENT SPECIFICATION

(45) Date of publication and mention of the grant of the patent:
**16.04.1997 Bulletin 1997/16**

(21) Application number: **92924377.2**

(22) Date of filing: **12.11.1992**

(51) Int Cl.$^6$: **C09D 5/02**, C09D 7/12, C09C 1/00, C09D 17/00

(86) International application number:
**PCT/US92/09648**

(87) International publication number:
**WO 93/12183 (24.06.1993 Gazette 1993/15)**

(54) **AQUEOUS DISPERSION OF COMPOSITE PARTICLES INCLUDING POLYMERIC LATEX**

WÄSSRIGE DISPERSION AUS KOMPOSIT-TEILCHEN ENTHALTENDE POLYMERISCHEN LATEX

DISPERSION AQUEUSE DE PARTICULES COMPOSITES COMPRENANT DU LATEX POLYMERE

(84) Designated Contracting States:
**DE ES FR GB IT NL SE**

(30) Priority: **03.12.1991 US 801975**

(43) Date of publication of application:
**21.09.1994 Bulletin 1994/38**

(73) Proprietor: **ROHM AND HAAS COMPANY Philadelphia Pennsylvania 19105 (US)**

(72) Inventors:
• **EMMONS, William, D.**
**Huntingdon Valley, PA 19006 (US)**
• **VOGEL, Martin**
**Jenkintown, PA 19046 (US)**
• **THIBEAULT, Jack, C.**
**Doylestown, PA 18901 (US)**
• **SPERRY, Peter, R.**
**Doylestown, PA 18901 (US)**
• **LINDER, Linus, W.**
**Lansdale, PA 19446 (US)**
• **Kostansek, Edward Charles**
**Pennsylvania 18912 (US)**

(74) Representative: **Tanner, James Percival et al**
**ROHM AND HAAS (UK) LTD.**
**European Operations Patent Department**
**Lennig House**
**2 Mason's Avenue**
**Croydon CR9 3NB (GB)**

(56) References cited:
EP-A- 0 113 435        EP-A- 0 337 672
EP-A- 0 421 238        US-A- 4 025 483

**Description**

## BACKGROUND OF THE INVENTION

1. Field Of The Invention

This invention relates generally to a process for preparing aqueous compositions including inorganic material particles, such as aqueous compositions including titanium dioxide pigment, and more particularly to the distribution of inorganic material particles in products formed by the loss of water from such aqueous compositions.

2. Background Of The Invention

Aqueous dispersions of polymeric latex are used to prepare a tremendous variety of commercially important products, including paints, coatings, primers, mastics, caulks, binders for non-woven materials, and adhesives. Frequently, the polymeric latex is included to form a continuous phase as the water is lost in order to bind the product together, and to contribute important physical properties. In addition to the polymeric latex, most products include particles of one or more inorganic materials. Some inorganic materials contribute an important functional property to the product, such as fire resistance, sheen, flatting, hardness, color, texture, opacity, or toughness. Often these inorganic materials are relatively expensive, and it is desirable to employ them in the formulated product as efficiently as possible. In other instances, the inorganic materials, for example, fillers, may be less expensive than the latex and it may be desired to incorporate the maximum amounts possible without compromising the desirable properties attributable to the latex, such as, for example, binding and tensile properties, such as elongation and, in the case of adhesives, minimum loss of tackiness. Since the polymeric latex is typically the most expensive component of the formulated product, inexpensive inorganic materials are frequently included to reduce product cost. In this case, it is desirable to use the greatest possible volume of the inexpensive inorganic material, while still retaining the desired performance properties of the product, since these properties typically decline when too much of the inexpensive inorganic material is included. A good example is a paint formulated with so much of an inexpensive filler pigment, such as calcium carbonate, that the critical pigment volume concentration is exceeded. Such a paint will provide a much less protective coating for a surface on which it is applied than a similar paint formulated with slightly less filler, and having a pigment volume concentration below the critical level.

One way of making efficient use of the inorganic material employed is by dispersing this pigment as well as possible. Agglomerated or aggregated inorganic material pigment particles frequently make less than their full potential contribution to the performance of the product, such as, for example, strength and resistance properties. Inorganic materials are typically sold as dry powders. As a practical matter, this powder must be milled in a liquid medium to break up agglomerates and to obtain a colloidally stable dispersion. Milling conventionally takes place in the presence of a polyelectrolyte particle dispersant which adsorbs to the particle surface.

Titanium dioxide has been for many years the pigment of choice for conferring opacity to plastic sheets and films, and particularly to coatings formed from coating compositions and paints. In paints titanium dioxide is typically the most expensive component of the formulation. It has been an ongoing objective of the coatings industry to achieve the desired degree of opacity in a coating while at the same time using as little titanium dioxide pigment as possible. One way in which this is done is by employing titanium dioxide which has an optimal average particle size and particle size distribution for scattering light. Another way of making efficient use of the titanium dioxide employed is by dispersing this pigment as well as possible.

Agglomerated or aggregated titanium dioxide pigment particles make less than their full potential contribution to the performance of the coatings, such as, for example, with regard to coating opacity and colorant potential. Such aggregates can also impair certain other properties of the coating or film such as, for example, strength and resistance properties. Titanium dioxide is often sold as a dry powder. As a practical matter, this powder must be milled in a liquid medium to break up agglomerates and to obtain a colloidally stable dispersion.

In order to stabilize the product formulation against settling or flocculation, a variety of surface active dispersing additives have been used. Manufacturers have often used inorganic materials as dry powders. In this case, a dispersing additive is usually added directly to the material and a small amount of water in a preliminary "grind" step in which loose agglomerates of the inorganic material particles are broken up by mechanical shear forces. The dispersing additive typically remains in the mix through the subsequent steps in the product preparation process and typically will be found in the fully formulated product composition.

Sometimes inorganic materials are commercially supplied in concentrated slurry form, such as, for example, in water. However, since the inorganic material particles in the slurries are prone to aggregation upon storage, the slurries often need to be redispersed for maximum effectiveness before use in formulating a coating composition. Either the manufacturer of the inorganic material slurry or the end user of the slurry, and sometimes both, may perform the redispersion step.

The opacifying capability or hiding power of a paint or coating is a function of the spacing of the titanium pigment particles in the dried coating. The light scattering characteristics of titanium dioxide particles are well known. The average size and size distribution of titanium dioxide particles used for opacifying purposes has been highly optimized by the titanium dioxide manufacturers for maximum scattering. Maximum light scattering occurs when the titanium dioxide pigment particles have a diameter of from about 200 to about 250 nanometers and are spaced far apart from each other, on the order of a few particle diameters, so that there is minimal interference between the light scattering of neighboring particles.

In practice, however, for example in the formulation of paints, it is widely recognized that when enough titanium dioxide particles have been dispersed into the polymeric coating vehicle to yield films of acceptable opacity, the level of opacity which is achieved is significantly less than would be theoretically predicted from the light scattering potential of a single titanium dioxide particle multiplied by the total number of particles in the path of light passing through the film.

A number of factors have been identified which partially account for the diminution of opacity from the theoretical predictions. If two or more titanium dioxide particles are in actual contact with each other, or even if they are closer together than the optimum spacing distance, the particles will behave like a single aggregated larger particle and result in reduced light scattering. This occurs if the titanium dioxide particles are not adequately deaggregated during the dispersion process. However, even if the titanium dioxide particles are fully deaggregated in the dispersion process, a random distribution of particles will not provide the maximum scattering achievable in theory if the particles were optimally distributed.

In a related phenomenon, referred to as "crowding," titanium dioxide pigment particles are forced to be nearer to each other than the desired optimum merely by the lack of available space. This lack of available space may be caused by the space taken up by the other coating fillers and extenders which are of a comparable size to, or which are larger than, the pigment particles. In the case of polymeric binders, which are particulate in nature prior to film formation, such as, for example, latex or emulsion polymers, and in the case of nonaqueous dispersion polymers, the binder polymer particles themselves can crowd pigment particles, especially if they are of comparable or larger in size than the titanium dioxide particles.

The traditional guiding rule or goal in the formulation of practical, dispersed titanium dioxide-containing coatings, such as, for example, pigmented latex paints, is to make the titanium dioxide dispersion and the polymeric latex binder dispersions as colloidally stable and compatible with each other as possible. Nevertheless, in coatings formed from such dispersions the distribution of the titanium dioxide particles in the polymer system at best approaches that of a random distribution. As a result, there exist a substantial number of titanium dioxide particles in close proximity to each other, and possibly in direct physical contact with each other.

In the case of latex paints and coatings, it is conventional practice to first form a stable aqueous dispersion of titanium dioxide pigment with other fillers or extenders. This dispersion, also known as a "mill base" or "grind," may contain water-miscible solvents, such as for example glycols and glycol ethers, and relatively low molecular weight water soluble polyelectrolytes as titanium dioxide pigment grinding aids or dispersants. Generally, these pigment dispersants are anionic polyelectrolytes. Many different types of such dispersants are known. For example, U.S. Patent 2,930,775 discloses the water soluble salts of diisobutylene naleic anhydride copolymers having molecular weights between about 750 and 5,000 as dispersants when employed at concentrations of from about 0.05 to 4% on pigment weight. U.S. Patent 4,102,843 and U.S. Reissue Patent 31,936 disclose the use of water soluble salts of copolymers of hydroxyalkyl-(meth)acrylates and (meth)acrylic acid of molecular weights of from 500 to 15,000 at concentrations of from about 0.01 to 5% on pigment to produce glossy emulsion paints. U.S. Patent 4,243,430 discloses a water-soluble dispersant comprising an addition copolymer comprising greater than 30% alpha, beta-unsaturated monovinylidene carboxylic acid, the copolymer having an apparent pKa between 6.0 and 7.5 and molecular weight between about 500 and 15,000, and forming a water soluble salt with zinc ammonia complex ion. Low molecular weight polyphosphate salts, such as potassium tripolyphosphate, are also used because they are relatively inexpensive, but they tend to have marginal hydrolytic stability.

The use of these and other polyelectrolyte dispersants is described in T.C. Patton, Paint Flow and Pigment Dispersion, (Wiley Interscience, 2nd edition) 290-295 (1979). Also described therein (pages 468-497) are a number of milling devices used in the preparation of pigment dispersions. One such device which is commonly used in the manufacture of latex paints is the highspeed disk disperser designed to develop high shearing forces in the pigment grinding step. Common practice is to use the device with dispersant to form a stable dispersion of titanium dioxide pigment, and then to add to the dispersion the aqueous latex polymer binder along with the other ingredients, such as for example thickeners and rheology modifiers, antifoaming agents, colorants, coalescing agents or temporary plasticizers for the latex polymer particles, and surfactants for substrate wetting and colorant compatibility. The pigment dispersion process and the relation to flocculation and optical properties are discussed further in Treatise on Coatings, Vol. III, Part 1 (Marcel Decker) (1975); Pigment Handbook, Vol. I (2nd edition, Wiley Interscience) (1988), and Pigment Handbook, Vol. III (Wiley Interscience) (1973).

US 4025483 discloses stabilised titanium dioxide slurries comprising titanium dioxide, particles of a latex addition polymer and a polymeric carboxylic acid as pigment dispersant.

There is a continuing need to improve the effective utilization of inorganic materials such as titanium dioxide in aqueous coating compositions and thereby to improve the opacity and other performance properties of coating compositions.

The present invention provides a process for preparing an aqueous dispersion of composite particles, the composite particles each including a plurality of polymeric latex particles adsorbed onto an inorganic material particle, such as a titanium dioxide particle. The resulting composite particles provided by the present invention can be used in preparing formulated aqueous compositions, such as coating compositions, adhesives, binders, for non-woven materials, and paints, which in turn give coatings and other products in which the inorganic material is more efficaciously dispersed and distributed than in prior art formulations.

The process of the present invention contemplates dispersing inorganic material particles such as titanium dioxide pigment particles in an aqueous medium with a pigment dispersant, such as a polyelectrolyte pigment dispersant. The process of this invention further contemplates preparing a dispersion or suspensions of selected polymeric latex particles in the aqueous medium. These polymeric latex particles are selected to adsorb onto the dispersed inorganic pigment particles to provide composite particles, each including both an inorganic material particle and adsorbed polymeric latex particles. The inorganic material particles remain dispersed in the aqueous medium during and after adsorption of the polymeric latex particles, that is, during their transformation into composite particles. The selected polymeric latex particles are believed to strongly adsorb onto the inorganic material particles. In some cases, the selected polymeric latex particles are believed to, in effect, irreversibly adsorb onto the inorganic material particles. In at least some cases, it is believed that the previously adsorbed pigment dispersant is displaced by the adsorbed polymeric latex particles.

The selected polymeric latex particles can be prepared by processes which are believed to provide a high concentration of acid residues at the surface of the particles, processes which employ a high level of acid-functional monomer, or processes which provide copolymerization of adsorption-promoting monomers, such as dihydrogen phosphate-functional monomers or dicarboxylic acid monomers such as itaconic acid.

In addition to the selected polymeric latex, other components can be added depending on the application for the aqueous composition. For example, a film-forming binder such as a relatively soft polymeric latex can be included, as well as other onventional components used to provide a formulated coating composition, such as coalescents, preservatives, thickeners, and rheology control agents. The adsorbed latex particles remain adsorbed during the film-formation, loss of water and other fugative components, and serve to space the inorganic particles apart in the coating film, improving performance properties.

Preferably, the selected polymeric latex particles are polymerized from monomer which provides polymer which is hard or rigid at the temperature at which the composite particles are to be used, such as monomer which provides a polymeric material with an effective glass transition temperature of at least 20 °C, more preferably at least about 35 °C, and even more preferably at least about 50 °C in the case of a composition including composite particles and applied at ambient or room temperature (that is, at about 20 - 23 °C). Higher temperature ranges may be more appropriate for applications at higher temperatures, such as baked coatings. The rigidity of the adsorbed polymeric latex particles is believed to aid in spacing adjacent inorganic material particles.

Alternatively, the selected polymeric latex can have a low effective glass transition temperature and serve as a binder for the composition. However, softer polymeric latex particles are thought to deform during film-formation, such that somewhat larger particles may be required to obtain the same pigment particle spacing as with a hard or rigid polymeric latex.

The improved dispersion of the inorganic material particles provided by the present invention advantageously provides greater flexibility in preparing aqueous compositions including dispersed inorganic material. For example, in some cases the present process provides a means of reducing the amount of inorganic material required to provide desired properties, such as mechanical properties or opacification. When the composite particles include titanium dioxide and are used in coating compositions, the present process provides improved coating properties, such as opacity or hiding, tint strength, mechanical properties, "ICI" or "cone-and-plate" (high shear rate) viscosity, gloss, and scrub resistance. The process also provides coating compositions giving coatings with improved opacity for a given pigment level.

The composite particles resulting from the process of this invention are particularly useful for improving the performance properties and permeability of coatings and paints formed therefrom. Alternatively, the process of the invention offers the ability to formulate coatings and films of substantially equal performance properties as conventional systems but with lower concentrations of expensive inorganic material particle concentrations, such as in the case of titanium dioxide, and accordingly at lower cost. Similarly, higher concentrations of low cost inorganic materials can be obtained using the process of the present invention.

The pigment dispersant can be a polyelectrolyte dispersant. These polyelectrolyte dispersants, such as potassium tripolyphosphate, polyacrylic acid, polymethacrylic acid, and the like, which are used as dispersion aids in preparing a pigment grind for a coating composition, are believed to adsorb to the surface of the inorganic materials in the grind, including any titanium dioxide particles, and thus increase the absolute value of the surface charge density or surface potential of the pigment particles. As polymeric latex particles are frequently stabilized in aqueous media by surface charge of the same sign (negative) as the polyelectrolyte dispersants typically exhibit, the effect of employing polyelectrolyte dispersants can be to increase electrical repulsive forces between inorganic material particles and polymeric latex particles. Adsorption of polymeric latex particles onto the inorganic material particles would appear less likely when the inorganic material particle is stabilized by a polyelectrolyte dispersant. Thus, the extent of adsorption of the selected polymeric latex particles of the present invention is unexpected.

The process of the present invention further contemplates preparing fully formulated aqueous compositions, including aqueous coating compositions, using the composite particles formed by adsorption of the polymeric latex particles onto the inorganic material particles, and the subsequent use of the fully formulated aqueous compositions to form products, including coatings, and coated articles. While the aqueous medium containing the composite particles can be used directly in some cases to form products, in many instances it is desirable to employ the aqueous medium including the composite particles as an intermediate in the production of an aqueous composition, such as a coating composition, including one or more additional components (a "fully formulated" composition).

In one presently preferred embodiment, the process of this invention contemplates preparing a mixture of at least two types of polymeric latex particles, the first type being the selected polymeric latex particles to adsorb to the dispersed inorganic material particles, and preferably having an effective glass transition temperature of at least about 20 °C, more preferably at least about 35 °C, and even more preferably at least about 50 °C. The second type of polymeric latex particle is provided to form a binder for the composite particles. The mixture can be used to prepare formulated compositions, such as coating compositions, in which inorganic particles are advantageously spaced by adsorbed selected polymeric latex particles to provide improved performance properties.

In another preferred embodiment, two or more types of soft polymeric particles are employed as binders, one or more of these being a selected polymer latex which strongly adsorbs to the inorganic material particles.

## BRIEF DESCRIPTION OF THE DRAWINGS

Fig. 1 is a schematic illustration of a preferred embodiment of the process of the present invention.

Fig. 2 is a schematic illustration of the distribution of titanium dioxide particles in a coating film formed from an aqueous composition prepared using a conventional prior art process.

Fig. 3 is a schematic illustration of the distribution of titanium dioxide particles in a coating film formed from an aqueous coating composition prepared using the process of the present invention.

Fig. 4a is a scanning electron micrograph showing composite particles prepared by the process of this invention.

Fig. 4b is a scanning electron micrograph showing a mixture of polymeric latex particles and inorganic material particles prepared by a prior art process.

## DETAILED DESCRIPTION

The process of the present invention provides selected polymeric latexes for use in adsorption onto inorganic material particles, the inorganic material particles having been initially dispersed using a pigment dispersant, such as a polyelectrolyte dispersant, or a steric stabilization agent.

The process provides a solution to the problem of how to practically utilize polymeric latex particles and inorganic material particles to improve the distribution and stability of the inorganic material particles in aqueous-based coatings containing high concentrations of inorganic material particles.

Polymeric latex particles of selected composition, size and surface charge can be effectively used in the process of the present invention along with inorganic material particles, including in particular titanium dioxide particles, in concentrated dispersions. The selected polymeric latex particles function in the process by adsorbing onto the surface of the inorganic material particles in the presence of the initially adsorbed pigment dispersant. While not being bound by any particular theory of the molecular mechanism of the process of the present invention, it is presently believed that the initial pigment dispersant adsorbed to the surface of the inorganic material particles is in equilibrium with initial pigment dispersant in the aqueous medium, that the initial pigment dispersant does not completely cover the surface of the inorganic material particles at all times, and that at least a portion of the surface of the inorganic material particle is available for adsorption of the selected polymeric latex particles.

The preferred polymeric latex particles are believed to adsorb essentially irreversibly on the surface of the inorganic material particles, so that in time the initial pigment dispersant is replaced at least to some extent on the surface by the polymeric latex. The polymeric latex is preferably selected to provide this strong adsorption. This can be accomplished in different ways. In one presently preferred embodiment, a polymeric latex is polymerized from monomer mixture including a high level such as at least ten percent by weight of polymer solids of carboxylic acid-functional monomer. In another presently preferred embodiment, a polymeric latex having acidic functional groups preferrentially distributed proximate the surface is employed. In still another presently preferred embodiment, a polymeric latex prepared from monomer including at least one polymerizable ethylenically unsaturated dihydrogen phosphate ester, such as a dihydrogen phosphate ester of 2-hydroxyethyl methacrylate, is employed. In yet another presently preferred embodiment, the polymeric latex is polymerized from monomer including a dicarboxylic acid monomer, such as itaconic acid.

As distinguished from prior art processes in which polymerization takes place in the presence of and/or on the surface of inorganic particles, the process of present invention utilizes selected, separately formed, polymeric latex particles to improve the distribution of concentrated inorganic material particles in polymer compositions, including dried films formed from aqueous coating compositions. More particularly, the process provides means for improving the distribution of inorganic material particles, and especially titanium dioxide pigment articles, such as those present at concentrations of at least about three percent by volume of the nonvolatile components of an aqueous composition, by adsorption of at least one selected, separately polymerized, polymeric latex onto the inorganic material particles, thereby forming a stable dispersion of microcomposite particles.

The present process provides for the adsorption of the selected polymeric latex on the surface of the inorganic material particles in the presence of the initial pigment dispersant, in concentrated, stable dispersions. The composite particles resulting from this adsorption process are particularly useful for improving the opacity, gloss, high shear viscosity, color development, permeability, and mechanical properties of coatings and films formed therefrom. Alternatively, the adsorption process of the invention offers the ability to formulate coatings and films of substantially equal performance properties as conventional systems but with lower inorganic material particle concentrations and accordingly at lower cost. In addition, the present invention provides the opportunity to formulate compositions using greater quanities of low cost inorganic material particles than otherwise, while yet providing good performance properties.

The selected polymeric latex particles of the present invention adsorb onto the surface of the dispersed inorganic material particles. Preferably, the selected polymeric latex particles adsorb strongly. There are many prior art processes in which dispersed inorganic material particles and polymeric latex particles are present together in an aqueous medium. For example, many aqueous coating compositions and water-based paints include such inorganic material particles and polymeric latex particles, the polymeric latex particles serving to form the binder for the inorganic material particles in a coating formed from the composition. However, in these compositions, the polymeric latex particles do not adsorb strongly to the dispersed inorganic material particles, as both the inorganic material particles and the polymeric latex particles will typically have surface potentials with the same sign, typically negative, the like electrical charges serving to stabilize the system by mutual repulsion.

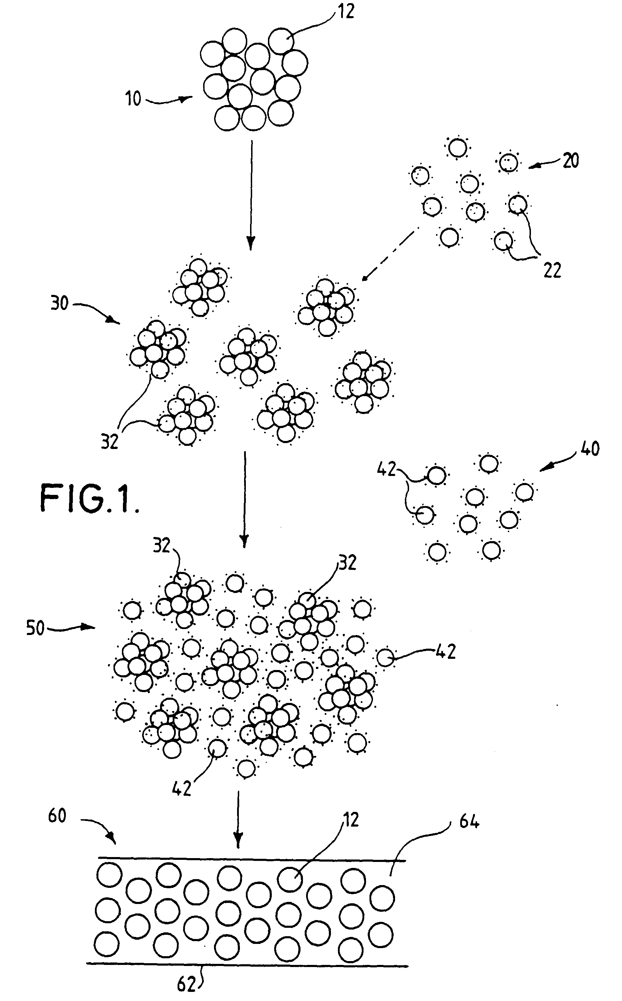

One embodiment of the process of the present invention is illustrated schematically in Figure 1. A powder of titanium dioxide pigment 10 including titanium dioxide particles 12, partially aggregated or agglomerated (by van der Waals, or contact forces, or by moisture, or the like), is mixed with a solution of a polyelectrolyte dispersant 20. Typically, an amount of an aqueous medium (not shown) is added to reduce the concentration of the particles. The mixture of titanium dioxide pigment 10 and the polyelectrolyte dispersant 20 is subjected to shear forces in a disperser (not shown), and the polyelectrolyte dispersant macromolecules 20 spontaneously adsorb to the surface of titanium dioxide particles 12 to form a slurry or pigment grind 30 of dispersed titanium dioxide particles 32 in the aqueous medium. The adsorbed polyelectrolyte dispersant increases the absolute value of the surface potential of the titanium dioxide particles. Without the addition of the polyelectrolyte dispersant and the application of shear forces by mixing, the titanium dioxide particles may form homo-aggregates, as conditions are preferably selected so that the titanium dioxide particles are un-stable with respect to homo-coagulation.

Figure 1 further illustrates the addition of a second aqueous dispersion 40 including a mixture of two varieties of polymeric latex particles 42 to the slurry 30 of dispersed titanium dioxide particles 32 to form initially a formulated coating composition 50 including a mixture of dispersed titanium dioxide particles 32 and the two varieties of polymeric latex particles 42. The mixture of polymeric latex particles 42 includes a first type of polymeric latex particle 44 selected to adsorb strongly to the dispersed titanium dioxide particles 32 to form composite particles 46 including both a titanium dioxide particle 46a and a plurality of adsorbed selected polymer latex particles 46b. In one embodiment, the selected polymeric latex particles 46b have an effective glass transition temperature which is at least about room temperature or about 20 °C, and more preferably at least about 50 °C. In addition, the mixture of polymeric latex particles 42 includes a second type of polymeric latex particle 48 having a relatively low effective glass transition temperature, such as below about 10 °C, and serving ultimately to form a binder for the the composite particles 46.

In another preferred embodiment, both the selected polymeric latex particles 46b and the second type of polymeric latex particles 48 have relatively low effective glass transition temperatures, such as below about 10 °C, and both serve as binders for the titanium dioxide particles.

In addition, other components such as low molecular weight cosolvents, plasticizers, anti-fungal and anti-bacterial agents, stabilizers and the like can be added (not shown) to provide a fully formulated coating composition. The fully formulated coating composition is then applied by conventional means to a surface 62 and permitted to dry and cure, thus forming a coating film 60 in which the composite particles 46 including the titanium dioxide pigment particles 12 are imbedded in a continuous polymeric film 64 formed from the second variety of polymeric latex particles 42. The spacing of the titanium dioxide particles 12 in the film 60 is not random, but instead is improved in comparison with prior art coatings films, so as to provide enhanced opacity.

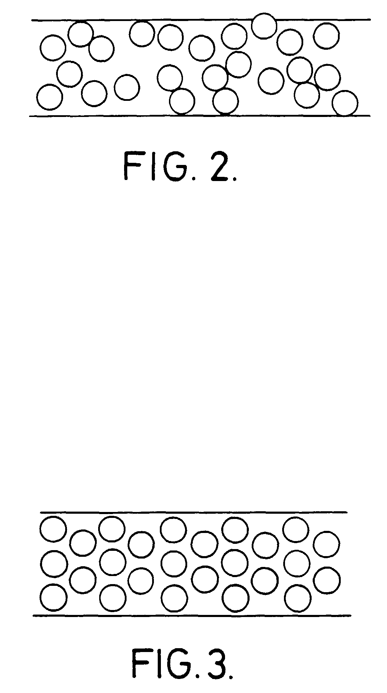

Figure 2 schematically illustrates the distribution of titanium dioxide particles in a coating film formed from an aqueous composition prepared using a conventional prior art process. After thorough mixing of coating compositions, particles tend to be distributed in a random manner through the film, with many particles not contributing as much to the total light scattering of the film because they are closer to other particles than optimal. In contrast, Figure 3 schematically represents the distribution of titanium dioxide particles in a coating film formed from an aqueous coating composition using the process of the present invention. In this case, the particles are more regularly distributed in the film, resulting in greater effective light scatter per particle. Alternatively, fewer particles will provide a desired degree of opacification, and the coating PVC can be lower than if a prior art titanium dioxide dispersion method were used.

In the process of the present invention, the dispersed inorganic material particles can have negative surface potentials and charges, the negative charges serving to stabilize the dispersed inorganic material particles against homoaggregation. Similarly, the selected polymeric latex particles can have negative surface potentials and surface charges, also serving to stabilize the individual polymeric latex particles against homoaggregation or homocoagulation. However, despite the mutually repulsive electrical forces exerted on either type of particle, the selected polymeric latex particles are found to adsorb strongly, and even irreversibly, to the surface of the dispersed inorganic material particles. The mechanism for the adsorption process is not well understood. It is believed that the polyelectrolyte adsorbed to the surface of the inorganic material particles may be in equilibrium with polyelectrolyte dispersant dissolved in the aqueous medium, and that the selected polymeric latex particles may compete with the polyelectrolyte dispersant for binding sites on the surface of the inorganic material particles. However, it is known that adsorption of the selected polymeric latex particles may require several days after preparing the mixture including both the dispersed inorganic material particles and the selected polymeric latex particles. It is believed that adsorption of the selected polymeric latex particles is accompanied by reduction in the amount of adsorbed polyelectrolyte dispersant on the inorganic material particles, or a net displacement of the polyelectrolyte dispersant from the inorganic material particles.

An alternative way to stabilize colloidal particles against uncontrolled aggregation is to provide a surface layer or sheath of water soluble polymer around the colloidal particle, the chains of which polymer extend into the aqueous phase. This provides a steric barrier between the particles and between such a particle and other surfaces. A variety of water soluble polymers are suitable, e.g., polyacrylamide, polyvinyl alcohol, polyethylene oxide, water soluble polymers derived from cellulose. The water soluble polymers may be suitably attached to the particle surfaces by several means, among them by chemical grafting, through polymerizable unsaturated groups linked to the water soluble polymer, as well as by physical adsorption, often enhanced by the presence of a hydrophobic group attached to the water soluble polymer. The hydrophobic group may be simply a hydrocarbon chain or a water insoluble block polymer attached to the water soluble portion of the polymer. Steric stabilization has been thoroughly described by a number of authors, e.g., D.H. Napper, Polymeric Stabilization of Colloidal Dispersions, Academic Press, 1983; E.D. Goddard and B. Vincent, Polymer Adsorption and Dispersion Stability, ACS Symposium Series 240, 1984. Partial to thorough aggregation of sterically stabilized particles may be accomplished by reducing the solvency of the medium for the attached polymer chains, e.g., by variations in temperature, pressure, or composition of the liquid medium as described by Napper, 1983, chapter 5. For instance, a dispersion sterically stabilized with polyethylene oxide chains can be destabilized by the addition of salt or a water miscible nonsolvent for the polymer.

Thus, in the process of the present invention, sterically stabilized polymeric latex particles can adsorb onto an inorganic material particle surface to provide composite particles. Hence, the present invention provides a process for preparing an aqueous dispersion of composite particles, the process comprising suspending inorganic material particles such as titanium dioxide particles in an aqueous medium. In this aspect, the process further includes suspending the selected polymeric latex particles in the aqueous medium, the selected polymeric latex particles being stabilized against homoaggregation by polymeric steric stabilization. Also included is mixing the aqueous medium containing the inorganic material particles and the polymeric latex particles, the polymeric latex particles adsorbing onto the inorganic material particles to provide the composite particles.

In the present invention the polymeric latex particles employed are polymerized in the absence of inorganic material particles, as distinguished from in situ processes.

Conditions which give gross heterocoagulation (i.e. flocculation) of the inorganic material particles and the polymeric latex particles can be avoided by providing both the inorganic material particles and the polymeric latex particles with negative surface potentials.

The polymeric latex particles can be prepared by a selected emulsion polymerization process which provides polymeric latex particles which nevertheless strongly adsorb to the inorganic material particles under these conditions, thus giving adsorption in a controlled manner to form the composite particles.

In some embodiments of the present invention inorganic material particles are added to an aqueous dispersion of polymeric latex particles. In particular, in these embodiments the present invention provides a process for preparing an aqueous dispersion of composite particles, the composite particles each comprising a plurality of selected polymeric latex particles adsorbed onto an inorganic material particle. In these embodiments the process comprises:

a) preparing a dispersion or suspension of polymeric latex particles in an aqueous medium, the polymeric latex particles having a negative surface potential and being prepared by a preparative emulsion polymerization process in the absence of inorganic material particles, the preparative emulsion polymerization process being selected from the class consisting of:

1) emulsion polymerization processes employing a monomer mixture including at least one polymerizable ethylenically unsaturated acid-functional monomer, the at least one polymerizable ethylenically unsaturated acid-functional monomer being selected from the class consisting of:

A) itaconic acid; and
B) dihydrogen phosphate esters of an alcohol, the alcohol containing a polymerizable olefinic group;

2) emulsion polymerization processes providing acid-functionality proximate the surface of the polymeric latex particle; and
3) emulsion polymerization processes employing a monomer mixture including at least one ethylenically unsaturated acid-functional monomer, the total weight of ethylenically unsaturated acid-functional monomer comprising at least ten percent by weight of the polymeric latex solids;

b) suspending inorganic material particles in the aqueous medium, the inorganic material particles having a negative surface potential in the aqueous medium, the negative surface potential of the inorganic material particles and the polymeric latex particles stabilizing the inorganic material particles and the polymeric latex particles against gross heterocoagulation, the polymeric latex particles being selected, by the use of the preparative emulsion polymerization process ,to adsorb onto the inorganic material particles in a controlled manner, and
c) mixing the aqueous medium containing the inorganic material particles and the selected polymeric latex particles, the selected polymeric latex particles adsorbing onto the inorganic material particles to provide the composite particles.

More specifically, in this set of embodiments, the present invention provides a process for preparing an aqueous dispersion of composite particles, the composite particles each comprising a plurality of selected polymeric latex particles adsorbed onto an inorganic material particle, the process comprising

a) preparing a dispersion or suspension of selected polymeric latex particles in an aqueous medium, the polymeric latex particles having a negative surface potential and being prepared by a preparative emulsion polymerization process in the absence of inorganic material particles, the preparative emulsion polymerization process employing a monomer mixture including at least one polymerizable ethylenically unsaturated acid-functional monomer selected from the class consisting of monobasic and polybasic monomers having acidic functional groups including at least one proton with an acid equilibrium constant (pKa) of from 4 to 8;
b) suspending inorganic material particles in the aqueous medium, the inorganic material particles having a negative surface potential in the aqueous medium, the negative surface potential of the inorganic material particles and the polymeric latex particles stabilizing the inorganic material particles and the polymeric latex particles against gross heterocoagulation, the polymeric latex particles being selected, by the use of the preparative emulsion polymerization process, to adsorb onto the inorganic material particles in a controlled manner, and
c) mixing the aqueous medium containing the inorganic material particles and the selected polymeric latex particles, the selected polymeric latex particles adsorbing onto the inorganic material particles to provide the composite particles.

For example, the aqueous dispersion of composite particles can be prepared according to the process of these embodiments, such that the composite particles each comprise a plurality of polymeric latex particles adsorbed to a titanium dioxide particle, the polymeric latex particles including polymerized residues of itaconic acid.

Similarly, the present invention provides a process for preparing an aqueous composition, such as a pigment slurry, or a coating composition, including such dispersed composite particles. For example, the pigment slurry can comprise an aqueous dispersion of composite particles prepared according to the process of these embodiments, with the composite particles each comprising a plurality of polymeric latex particles adsorbed to a titanium dioxide particle, the polymeric latex particles including dihydrogen phosphate ester functional groups. Similarly, the pigment slurry can comprise an aqueous dispersion of composite particles prepared according to the process of these embodiments, wherein the composite particles each comprise a plurality of polymeric latex particles adsorbed to a titanium dioxide particle, and the polymeric latex particles include polymerized residues of itaconic acid. Further, in a coating composition prepared according to the process of these embodiments, the coating composition can comprise an aqueous dispersion of composite particles, the composite particles each comprising a plurality of polymeric latex particles adsorbed to a titanium dioxide particle, the polymeric latex particles including polymerized residues of itaconic acid.

In another set of embodiments a separate aqueous suspension of the inorganic material particles is prepared and mixed with the aqueous dispersion of the polymeric latex particles. In this set of embodiments, the present invention provides process for preparing an aqueous dispersion of composite particles or aqueous composition including such dispersed composite particles, the composite particles each comprising a plurality of selected polymeric latex particles adsorbed onto an inorganic material particle, the process comprising:

a) preparing a dispersion or suspension of polymeric latex particles in a first aqueous medium, the polymeric latex particles being prepared by a preparative emulsion polymerization process in the absence of inorganic material particles, the preparative emulsion polymerization process being selected from the class consisting of:

1) emulsion polymerization processes employing a monomer mixture including at least one polymerizable ethylenically unsaturated acid-functional monomer, the at least one polymerizable ethylenically unsaturated acid-functional monomer being selected from the class consisting of:

A) itaconic acid; and
B) dihydrogen phosphate esters of an alcohol, the alcohol containing a polymerizable olefinic group;

2-) emulsion polymerization processes providing acid-functionality proximate the surface of the polymeric latex particle; and
3) emulsion polymerization processes employing a monomer mixture including at least one ethylenically unsaturated acid-functional monomer, the total weight of ethylenically unsaturated acid-functional monomer comprising at least ten percent by weight of the polymeric latex solids;

b) suspending inorganic material particles in a second aqueous medium; and
c) mixing the first and second aqueous media containing the polymeric latex particles and the inorganic material particles respectively, the polymeric latex particles and the inorganic material particles each having a negative surface potential in the mixed media, the negative surface potential of the inorganic material particles and the polymeric latex particles stabilizing the inorganic material particles and the polymeric latex particles against gross heterocoagulation, the polymeric latex particles being selected, by the use of the preparative emulsion polymerization process, to adsorb onto the inorganic material particles in a controlled manner, the polymeric latex particles adsorbing onto the inorganic material particles to provide the composite particles. --

More specifically, in this second set of embodiments, the present invention provides a process for preparing an aqueous dispersion of composite particles, the composite particles each comprising a plurality of selected polymeric latex particles adsorbed onto an inorganic material particle, the process comprising:

a) preparing a dispersion or suspension of polymeric latex particles in an aqueous medium, the polymeric latex particles having a surface potential and being prepared by a preparative emulsion polymerization process in the absence of inorganic material particles, the preparative emulsion polymerization process being selected from the class consisting of:

1) emulsion polymerization processes employing a monomer mixture including at least one polymerizable ethylenically unsaturated acid-functional monomer, the at least one polymerizable ethylenically unsaturated acid-functional monomer being selected from the class consisting of:

A) itaconic acid; and
B) dihydrogen phosphate esters of an alcohol, the alcohol containing a polymerizable olefinic group;

2) emulsion polymerization processes providing acid-functionality proximate the surface of the polymeric latex particle; and
3) emulsion polymerization processes employing a monomer mixture including at least one ethylenically unsaturated acid-functional monomer, the total weight of ethylenically unsaturated acid-functional monomer comprising at least ten percent by weight of the polymeric latex solids;

b) suspending inorganic material particles in the aqueous medium, the inorganic material particles having a surface potential in the aqueous medium of the same sign as the surface potential of the polymeric latex particles, the surface potential of the inorganic material particles and the polymeric latex particles stabilizing the inorganic material particles and the polymeric latex particles against gross heterocoagulation, the polymeric latex particles being selected, by the use of the preparative emulsion polymerization process, to adsorb onto the inorganic material particles in a controlled manner, and

c) mixing the aqueous medium containing the inorganic material particles and the selected polymeric latex particles, the selected polymeric latex particles adsorbing onto the inorganic material particles to provide the composite particles.

Alternatively, in this second set of embodiments, the present invention provides a process for preparing an aqueous dispersion of composite particles, the composite particles each comprising a plurality of selected polymeric latex particles adsorbed onto an inorganic material particle, which can be expressed as follows: The process comprises:

a) preparing a dispersion or suspension of polymeric latex particles in a first aqueous medium, the polymeric latex particles being prepared by a preparative emulsion polymerization process in the absence of inorganic material particles, the preparative emulsion polymerization process being selected from the class consisting of:

1) emulsion polymerization processes employing a monomer mixture including at least one polymerizable ethylenically unsaturated acid-functional monomer, the at least one polymerizable ethylenically unsaturated acid-functional monomer being selected from the class consisting of:

A) itaconic acid; and
B) dihydrogen phosphate esters of an alcohol, the alcohol containing a polymerizable olefinic group;

2) emulsion polymerization processes providing acid-functionality proximate the surface of the polymeric latex particle; and
3) emulsion polymerization processes employing a monomer mixture including at least one ethylenically unsaturated acid-functional monomer, the total weight of ethylenically unsaturated acid-functional monomer comprising at least ten percent by weight of the polymeric latex solids;

b) suspending inorganic material particles in a second aqueous medium; and
c) mixing the first and second aqueous media containing the polymeric latex particles and the inorganic material particles respectively, the polymeric latex particles and the inorganic material particles each having a surface potential of the same sign in the mixed media, the surface potential of the inorganic material particles and the polymeric latex particles stabilizing the inorganic material particles and the polymeric latex particles against gross heterocoagulation, the polymeric latex particles being selected, by the use of the preparative emulsion polymerization process, to adsorb onto the inorganic material particles in a controlled manner, the polymeric latex particles adsorbing onto the inorganic material particles to provide the composite particles. --

A third variation, in which previously dried latex particles are suspended in an aqueous suspension of inorganic material particles, is considered an obvious equivalent of these two sets of embodiments. These two sets of embodiments are considered to be mere variations in the sequence of steps. In some embodiments the surface potential of polymeric latex particles and the inorganic material particles have the same sign, but that sign may be either positive or negative.

The controlled adsorption of the polymeric latex particles of the present invention is paradoxical and unexpected. High surface potential on like sign on both pigment and polymer particles is commonly understood to provide great stability through repulsive electrical forces. Similarly, a high concentration of surface acid, such as thought to be provided by some of the emulsion polymerization processes which can be employed in preparing the selected polymeric latex particles for the present invention, might well be understood to provide for a high level of stabilizing repulsive forces with respect to similarly charged pigment particles. Nevertheless, it has been found that selected polymeric latex particles thought to possess such high surface acid can adsorb in a controlled manner to such pigment particles. This phenomenon has been employed in the present invention to achieve important and unexpected results, such as enhanced opacity, improved mechanical properties, and the like.

The surface characteristics of a particle suspended in an aqueous medium can often be adjusted by changing the characteristics of the aqueous medium. For example, many inorganic particles, including titanium dioxide particles, have acidic and/or basic functional groups at their surfaces, or can be treated to provide such groups at the particles' surfaces, such as by adsorption of anionic pigment dispersants and/or anionic surfactants, and the surface charge of these particles can be adjusted by varying the pH of the aqueous medium.

Similarly, polymeric latex particles can be synthesized with acidic and/or basic functional groups at their surfaces, or can be treated to provide such groups at the particles' surfaces, such as by adsorption of anionic pigment dispersants and/or anionic surfactants, and the surface charge density of these particles can also be adjusted by varying the pH of the aqueous medium. In the case of synthetic polymeric latex particles, the surface charge density can also be controlled by adjusting the density of surface acid and/or base groups through selection of polymer composition and polymerization process variables. An emulsion polymerization process which provides a preferential distribution of acid functionality for the particles, such as proximate the surface of the particles, can be used to prepare the selected polymeric latex particles employed in one presently preferred embodiment of the present invention.

The entire accessible pH scale is useful in the practice of this invention although it is preferred for reasons of excessive particle solubility, corrosion both to substrates and to the skin, and the like, to restrict the range to approximately 2 to 12 and more preferably in the range of from about 4 to about 10.

Inorganic material particles which have been subjected to prior surface treatment processes can be used in the process of the present invention. For example, titanium dioxide is available with various types of prior surface treatments which provide surface coatings of alumina or silica or mixtures of both, the treated inorganic material particles each exhibiting differing adsorption characteristics, as discussed in A. Brisson et al., J. Coatings Tech. 63 59-65 (1991).

The adsorption process of the present invention is believed to be dependent to some extent on the particle sizes of the polymeric latex particles and the inorganic material particles to be adsorbed thereto, as well as the amount of the polymeric latex and inorganic material particles in the aqueous adsorption medium. At a sufficiently high concentration, it can be postulated that the selected polymeric latex can adsorb onto and saturate the entire surface of the inorganic material particle's surface, and an empirical saturation level can be determined. It is believed that the empirical saturation level observed depends primarily on particle size, and that other factors such as surface charge, polymeric latex glass transition temperature, and the like, have little effect. Preferably, enough of the selected polymeric latex is employed to obtain optimum performance properties in fully formulated products prepared using the process.

In preparing coating formulations possessing desirable performance properties it is not necessary that the selected polymeric latex used in the adsorption process of the invention to also function as the polymeric binder for the coating or film, although this may be possible or even desirable in some cases. Instead, another polymeric latex material, preferably having a glass transition temperature tending to provide good film formation properties under the application conditions, can be provided to serve this function. By "glass transition temperature" is meant the second order phase transition temperature as determined empirically by mechanical methods as torsional braid analysis and the like or as calculated from monomer composition by the method of Fox. By "effective glass transition temperature" is meant the second order phase transition temperature of the polymeric material as modified by the presence of low molecular weight species such as coalescents, solvent, and the like. The function of the selected polymeric latex in contrast is to adsorb to the inorganic material particles and to space them from one another in the film formed by the polymeric binder latex. To serve this function, it may be desirable that the selected polymeric latex particles be relatively rigid, having a relatively high effective glass transition temperature under the application conditions, for example, at least about 20 °C, more preferably at least about 35 °C, and even more preferably at least about 50 °C. Thus, one presently preferred embodiment of the present invention provides an aqueous mixture of the selected, strongly adsorbing "hard" polymeric latex particles and the "soft", film-forming polymeric latex particles for use in preparing formulated aqueous compositions, such as coating compositions.

With regard to the average particle size or diameter of the selected polymeric latex particles and the inorganic material particles employed in the present process, it is generally preferred that the selected polymeric latex particles have an average diameter of from 20 nm to four times that of the inorganic material particles, and more preferably from 20 nm to the same diameter as that of the inorganic material particles, especially in the case in which the inorganic material particles are titanium dioxide particles. In one presently preferred embodiment, in the case of selected, strongly adsorbing "hard" polymeric latex particles, an average polymer latex diameter from 30 nm to 100 nm is preferred, and an average polymer latex diameter from 50 nm to 80 nm is especially preferred.

In a second presently preferred embodiment, in the case of selected, strongly adsorbing "soft" polymeric latex particles, an average polymeric latex particle diameter of from 80 nm to 600 nm is preferred, and an average particle diameter of from 100 nm to 400 nm is especially preferred.

However, the optimum relative particle sizes are strongly dependent on the rigidity of the polymeric latex particles, as measured, for example, by their glass transition temperature, and the pigment volume concentration of the coating or product formed from the composition including the composite particles. In at least some coating compositions, hiding is maximized when the polymeric latex particle diameter is greater than the titanium dioxide particle diameter.

The concentration of the titanium dioxide particles (and any other pigments which may be present in the composition) in a coating formulation is expressed in terms of the pigment volume concentration of the formulation. The pigment volume concentration (hereinafter referred to as the "PVC") of a formulation is defined as the volume amount of inorganic particles, including titanium dioxide and other pigment particles as well as extender particles, present in the formulation, divided by the sum of the volume amount of such inorganic particles plus polymeric latex particle solids in the formulation. The overall concentration of pigment particles, extender particles and emulsion polymer particles in a formulation is typically expressed in terms of a percent volume solids for the formulation. The percent volume solids is an expression of the extent of the dilution of the solids in a liquid vehicle, such as water.

Through the selection of the polymeric latex composition and the nature of the adsorbed pigment dispersant, the adsorption of the selected polymeric latex particles on the surface of the inorganic material particle can occur substantially upon the intimate mixing of the selected polymeric latex with the inorganic material particles, or the adsorption process may extend over a substantial time, such as several days or weeks. As a practical matter, the fact that the adsorption process is not significantly completed until after an extended period of time is of little import, as most formulated compositions including both inorganic material particles and polymeric latex particles must be stored for an extended period between manufacture and application, to accommodate the requirements of the consumer of the products. For example, several months may elapse after preparation of an aqueous latex paint and its application, and the paint must be formulated so as to possess sufficient storage stability. Only in those instances in which the formulated aqueous composition must be used shortly after manufacture is selection of the absorbing polymeric latex required to provide a high degree of adsorption on the inorganic material particles shortly after mixing.

The polymeric latexes used in the practice of the present invention can have monomer compositions and particle sizes closely related to polymeric latex binders prepared by standard emulsion polymerization techniques known in the art. If it is otherwise desirable to employ conventional levels of a polyelectrolyte dispersant in a pigment dispersion, it may be possible to employ a strongly adsorbing polymeric latex to adsorb onto the inorganic material particles. Strongly adsorbing polymeric latex particles can be prepared by emulsion polymerization processes by selection of process variables and the monomer composition.

In this invention, the polymeric latex particles are selected such that they can be used to adsorb to the inorganic material particles in the presence of a polyelectrolyte pigment dispersant already adsorbed to the surface of the inorganic material particles. As the polymeric latex particles are used in the presence of a pigment dispersant, it is preferable that the polymeric latex particles bind irreversibly to the inorganic material particles.

In a presently preferred embodiment of the process of the present invention, the selected polymeric latex particles do not themselves provide a binder for the product formed by the fully formulated aqueous composition. Because they are not required to flow and form a film, the particles can be more rigid than those employed to provide a binder. Thus, the polymeric particles can have a higher effective glass transition temperature than polymeric particles employed to serve as binder, and/or can include rigidifying levels of crosslinking. In this case the polymeric latex can also be prepared by standard emulsion polymerization techniques, but typically will not be suitable for use as a film-forming binder.

The polymeric latex particles used in these embodiments are preferably selected based on an ability to adsorb rapidly and irreversibly onto the inorganic material particles. Such particles are not displaced from the surface of the inorganic material particles upon addition of a second variety of polymeric latex having a monomer composition and physical properties which differ from that of the initial polymeric latex.

This aspect of the invention advantageously provides enhanced flexibility in formulation. For example, the second variety of polymeric latex particles can be polymeric latex which has a monomer composition and physical properties which have been optimized for use as a binder for a specific coating application. Some of these optimized properties may not be consistent with use of this specific polymeric latex as an adsorbent in the process of the present invention.

In this aspect, dispersion of the inorganic material particles can be otherwise effected, as with a polyelectrolyte pigment dispersant, with a mixture of irreversibly adsorbing polymeric latex particles and binder latex particles being subsequently mixed with the dispersed inorganic material particles, the irreversibly adsorbing polymeric latex particles advantageously spacing the inorganic material particles in the product of the formulated composition, while the binder latex particles provide a continuous film otherwise optimized for the application. This is especially useful when titanium dioxide is employed as the inorganic material, and the improved spacing results in enhanced opacity and hiding.

Strongly adsorbing polymeric latex particles useful in the process of this invention may be prepared by several alternative processes. In one such process, emulsion polymerization process variables are controlled to provide a preferred distribution of acid functionality for the polymer latex particles. In particular, processes which provide carboxylate functionality preferentially at the surface of the polymeric latex particles are preferred. In another process, the polymerization process is employed in which the total weight of ethylenically unsaturated acid-functional monomer comprises at least about five percent by weight of the polymeric latex solids, and preferably at least about ten percent by weight. In still another process for preparing strongly adsorbed polymeric latex particles, the monomer mixture from which the polymeric latex is polymerized includes at least one dihydrogen phosphate ester of an alcohol in which the alcohol contains a polymerizable olefinic group, such as a polymerizable vinyl group. Examples of such dihydrogen phosphate esters include allyl phosphate, allyl cellosolve phosphate, hydroxyethyl methacrylate phosphate, the mono- or diphosphate of bis(hydroxyethyl) fumarate or itaconate, etc. In particular, polymeric latex particles polymerized from monomer mixtures including the dihydrogen phosphate ester of 2-hydroxyethyl methacrylate are preferred. In another such process, the monomer mixture from which the selected polymeric latex is polymerized includes itaconic acid as a polymerizable, ethylenically unsaturated acid-functional monomer.

Without intending to be bound by any particular explanation of the mechanism of the process of the present invention, it is presently believed that selected polymeric latexes having acidic functionality with a pKa intermediate between weak and strong acids can be effective in the process of the present invention, such as those polymerized from monomer including copolymerizable, ethylenically unsaturated monomers with acidic functional groups with a pKa from about 4 to 8, more preferably about 6. It should be noted that the pKa of an acidic functional group can vary depending upon its enviorment. For example, the measured pKa of an acid functional group can change when a polymerizable monomer bearing that group is copolymerized with more hydrophobic comonomers and the environment of the acid functional group becomes more hydrophobic. It is theorized that under basic conditions, such as are frequently employed in aqueous polymeric latex-based coating compositions, the ionic conjugate species of these acidic functional groups enhance the adsorption of the selected polymeric latex particles on the inorganic material particles to provide the composite particles.

In general it is believed that reducing the effective glass transition temperature of the polymeric latex (for example, by changing the monomer composition) increases the tendency to adsorb strongly, as does increasing the level of acid-functional monomers, and in particular, the level of phosphate ester-functional monomers or itaconic acid, in the composition, or enhancing the surface concentration of acid-functional monomers. However, it is often desirable to employ a relatively hard, strongly adsorbing polymeric latex, to maximize the improvements provided by the present invention in the performance properties of aqueous composition including the composite particles.

Thus, the present invention provides aqueous dispersions of composite particles, as well as coating compositions and pigment slurries including such composite particles, wherein the composite particles each comprise a plurality of polymeric latex particles adsorbed to an inorganic material particle, the polymeric latex particles including, for example, dihydrogen phosphate ester functional groups.

These dihydrogen phosphate ester functional groups are believed to result from the polymeric latex particles being polymerized from monomer including at least one polymerizable dihydrogen phosphate-functional monomer. The polymerizable dihydrogen phosphate-functional monomer can be selected from the dihydrogen phosphate esters of an alcohol, the alcohol including a polymerizable group selected from polymerizable vinyl groups and polymerizable non-vinyl olefinic groups. The polymerizable dihydrogen phosphate-functional monomer can be selected from the dihydrogen phosphate monoester of 2-hydroxyethyl methacrylate, and mixtures of the dihydrogen phosphate monoester of 2-hydroxyethyl methacrylate and the phosphoric acid diester of 2-hydroxyethyl methacrylate.

Similarly, the present invention provides aqueous dispersions of composite particles, and coating compositions and pigment slurries including such composite particles, in which the composite particles each comprising a plurality of polymeric latex particles adsorbed to an inorganic material particle, the polymeric latex particles including polymerized residues of itaconic acid.

The polymeric latex used in the present invention is prepared by emulsion polymerization. Emulsion polymerization techniques for preparing aqueous dispersions of latex polymer particles from ethylenically unsaturated monomers are well known in the polymer arts, and any conventional emulsion technique can be used, such as single and multiple shot batch processes, and continuous processes. If desired, a monomer mixture can be prepared and added gradually to the polymerization vessel. The monomer composition within the polymerization vessel can be varied during the course of the polymerization, such as by altering the composition of the monomer being fed into the vessel. Both single and multiple stage polymerization techniques can be used. The latex polymer particles can be prepared using a seed polymer emulsion to control the number of particles produced by the emulsion polymerization as is known in the art. The particle size of the latex polymer particles can be controlled by adjusting the initial surfactant charge as is known in the art. The preparation of polymeric latexes is discussed generally in D.C. Blackley, Emulsion Polymerization (Wiley, New York, 1975). The preparation of acrylic polymeric latexes is described in, for example, Emulsion Polymerization of Acrylic Polymers, Bulletin, Rohm and Haas Company, Philadelphia,

A polymerization initiator can be used in carrying out the polymerization of the polymeric latex particles. Examples of polymerization initiators which can be employed include polymerization initiators which thermally decompose at the polymerization temperature to generate free radicals. Examples include both water-soluble and water-insoluble species. Examples of free radical-generating initiators which can be used include persulfates, such as ammonium or alkali metal (potassium, sodium or lithium) persulfate; azo compounds such as 2,2'-azo-bis(isobutyronitrile), 2,2'-azo-bis (2,4-dimethylvaleronitrile), and 1-t-butyl-azocyanocyclohexane); hydroperoxides such as t-butyl hydroperoxide and cumene hydroperoxide; peroxides such as benzoyl peroxide, caprylyl peroxide, di-t-butyl peroxide, ethyl 3,3'-di(t-butylperoxy) butyrate, ethyl 3,3'-di(t-amylperoxy) butyrate, t-amylperoxy-2-ethyl hexanoate, and t-butylperoxy pivilate; peresters such as t-butyl peracetate, t-butyl perphthalate, and t-butyl perbenzoate; as well as percarbonates, such as di(1-cyano-1-methylethyl)peroxy dicarbonate; perphosphates, and the like.

Polymerization initiators can be used alone or as the oxidizing component of a redox system, which also includes a reducing component such as ascorbic acid, malic acid, glycolic acid, oxalic acid, lactic acid, thiogycolic acid, or an alkali metal sulfite, more specifically a hydrosulfite, hyposulfite or metabisulfite, such as sodium hydrosulfite, potassium hyposulfite and potassium metabisulfite, or sodium formaldehyde sulfoxylate. The reducing component is frequently referred to as an accelerator.

The initiator and accelerator, commonly referred to as catalyst, catalyst system or redox system, can be used in proportion from about 0.001% to 5% each, based on the weight of monomers to be copolymerized. Accelerators such as chloride and sulfate salts of cobalt, iron, nickel or copper can be used in small amounts. Examples of redox catalyst systems include tertbutyl hydroperoxide/sodium formaldehyde sulfoxylate/Fe(II), and ammonium persulfate/sodium bisulfite/sodium hydrosulfite/Fe(II). The polymerization temperature can be from room temperature to about 90°C, and can be optimized for the catalyst system employed, as is conventional.

Chain transfer agents can be used to control polymer molecular weight, if desired. Examples of chain transfer agents include mercaptans, polymercaptans and polyhalogen compounds. Examples of chain transfer agents which may be used include alkyl mercaptans such as ethyl mercaptan, n-propyl mercaptan, n-butyl mercaptan, isobutyl mercaptan, t-butyl mercaptan, n-amyl mercaptan, isoamyl mercaptan, t-amyl mercaptan, n-hexyl mercaptan, cyclohexyl mercaptan, n-octyl mercaptan, n-decyl mercaptan, n-dodecyl mercaptan; alcohols such as isopropanol, isobutanol, lauryl alcohol and t-octyl alcohol; halogenated compounds such as carbon tetrachloride, tetrachloroethylene, and tricholorobromoethane. Generally from 0 to 10% by weight, based on the weight of the monomer mixture, can be used. The polymer molecular weight can be controlled by other techniques known in the art, such as selecting the ratio of initiator to monomer.

Catalyst and/or chain transfer agent can be dissolved or dispersed in separate or the same fluid medium and gradually added to the polymerization vessel. Monomer, either neat or dissolved or dispersed in a fluid medium, can be added simultaneously with the catalyst and/or the chain transfer agent. Amounts of initiator or catalyst can be added to the polymerization mixture to "chase" residual monomer after polymerization has been substantially completed to polymerize the residual monomer as is well known in the polymerization arts.

Aggregation of polymeric latex particles is typically discouraged by including a stabilizing surfactant in the polymerization mix. In general, the growing latex particles are stabilized during emulsion polymerization by one or more surfactants such as an anionic or nonionic surfactant, or a mixture thereof, as is well known in the polymerization art. Many examples of surfactants suitable for emulsion polymerization are given in <u>McCutcheon's Detergents and Emulsifiers</u> (MC Publishing Co., Glen Rock, NJ), published annually. Other types of stabilizing agents, such as protective colloids, can also be used. However, it is preferred that the amount and type of stabilizing surfactant or other type of stabilizing agent employed during the polymerization reaction be selected so that residual stabilizing agent in the aqueous product of the polymerization reaction does not significantly interfere with the subsequent adsorption of the polymeric latex to the inorganic material. Further, charged initiator fragments and copolymerized monomer bearing charged functional groups such as copolymerized acid-functional monomers are known to contribute to the stability of the resulting polymeric latex particles. It is important to note that stabilizing surfactants, copolymerized acidic monomers, residual initiator fragments, and the like, which tend to contribute to stability of the polymeric latex particles with respect to homoaggregation or homocoagulation, may also tend to stabilize the polymeric latex particles with respect to heterocoagulation or heteroaggregation in general, and composite particle formation in particular. Thus adjusting polymerization conditions to provide a desired level of residual initiator fragments and surface acid may be very important in providing polymeric latex particles for use in the controlled adsorption process of the present invention.

The polymeric latexes useful in the process of the present invention can be prepared from a wide range of polymerizable monomers, such as, for example, monoethylenically unsaturated monomers, including alpha, beta-monoethylenically unsaturated monomers such as alkyl acrylates and methacrylates. By "acrylic polymeric latex" is meant a polymeric latex polymerized from monomers comprising substantially polymerizable monomers including the acryl group ($-COCH=CH_2$) or methacryl ($-COC(CH_3)=CH_2$)) group, and specifically greater than about 80 weight percent (meth)acrylic monomers, based on the total monomer weight. Mixtures of polymeric latexes can also be used.

Examples of polymeric latexes which can be employed in the process of the present invention include those polymerized from ethylenically unsaturated monomers, such as <u>alpha, beta</u>-ethylenically unsaturated monomers, including styrene, butadiene, alpha-methylstyrene, vinyltoluene, vinylnaphthalene, ethylene, vinyl acetate, vinyl versatate, vinyl chloride, vinylidene chloride, acrylonitrile, methacrylonitrile, (meth)acrylamide, various (C1-C20)alkyl esters of (meth)acrylic acid; for example, methyl (meth)acrylate, ethyl (meth)acrylate, n-butyl (meth)acrylate, isobutyl (meth)acrylate, 2-ethylhexyl (meth)acrylate, cyclohexyl (meth)acrylate, n-octyl (meth)acrylate, n-decyl (meth)acrylate, n-dodecyl (meth)acrylate, tetradecyl (meth)acrylate, n-amyl (meth)acrylate, neopentyl (meth)acrylate, cyclopentyl (meth)acrylate, lauryl (meth)acrylate, oleyl (meth)acrylate, palmityl (meth)acrylate, and stearyl (meth)acrylate; other (meth)acrylates such as isobornyl (meth)acrylate, benzyl (meth)acrylate, phenyl (meth)acrylate, 2-bromoethyl (meth)acrylate, 2-phenylethyl (meth)acrylate, and 1-naphthyl (meth)acrylate; alkoxyalkyl (meth)acrylate such as ethoxyethyl (meth)acrylate; mono-, di-, and trialkyl esters of ethylenically unsaturated di- and tricarboxylic acids and anhydrides, such as ethyl maleate, dimethyl fumarate, trimethyl aconitate, and ethyl methyl itaconate. As used in the present specification and claims, "(meth)acrylate" denotes both "acrylate" and "methacrylate" and "(meth)acrylic denotes both "methacrylic" and "acrylic."

The ethylenically unsaturated monomer can also include at least one multi-ethylenically unsaturated monomer effective to raise the molecular weight and crosslink the polymer. Examples of multi-ethylenically unsaturated monomers that can be used include allyl (meth)acrylate, tripropylene glycol di(meth)acrylate, diethylene glycol di(meth) acrylate, ethylene glycol di(meth)acrylate, 1,6-hexanediol di(meth)acrylate, 1,3-butylene glycol (meth)acrylate, polyalkylene glycol di(meth)acrylate, diallyl phthalate, trimethylolpropane tri(meth)acrylate, divinylbenzene, divinyltoluene, trivinylbenzene, and divinylnaphthalene.

In addition to those monomers which are "functional" in the sense of including one or more polymerizable ethylenically unsaturated groups, monomers which also include one or more additional functional groups can be used in preparing the polymeric latexes used in the process of this invention. An important class of these functional monomers is that made up of those polymerizable ethylenically unsaturated monomers having acidic functional groups. Examples of these include acrylic acid, methacrylic acid, itaconic acid, beta-acryloxypropionic acid and higher monoacidic oligomers of acrylic acid, ethacrylic acid, alpha-chloroacetic acid, alpha-vinylacrylic acid, crotonic acid, alpha-phenylacrylic acid, cinnamic acid, chlorocinnamic acid, beta-styrylacrylic acid, itaconic acid, maleic acid, dihydrogen phosphate esters of an alcohol in which the alcohol also contains a polymerizable vinyl or olefinic group, such as allyl phosphate, allyl Cellosolve phosphate, mono- or diphosphate of bis(hydroxy-methyl) fumarate or itaconate, derivatives of (meth) acrylic acid esters, such as, for example, phosphates of hydroxyalkyl(meth)acrylates including 2-hydroxyethyl (meth) acrylate, such as Kayamer (trademark of Nihon Kayaku Co., Ltd.) PM-1, PM-2, PA-1, and PA-2 monomers, 3-hydroxypropyl (meth)acrylates, and the like. Examples of dihydrogen phosphate ester derivatives which can be employed include vinylbenzyl phosphates, and:

$$CH_2=CCH_3CO_2CH_2CH_2OPO(OH)_2$$

$$CH_2=CCH_3CO_2CH_2CH[OPO(OH)_2]CH_3$$

$$CH_2=CCH_3CO_2CH_2CH_2CH_2OPO(OH)_2$$

$$CH_2=CCH_3CO_2CH_2CHOHCH_2OPO(OH)_2$$

Thus, the present invention also provides aqueous dispersions of composite particles, as well as coating compositions and pigment slurries including such composite particles, in which the composite particles include polymeric latex particles polymerized from monomer including at least one polymerizable dihydrogen phosphate-functional monomer selected from the dihydrogen vinylbenzyl phosphates, and $CH_2=CCH_3CO_2CH_2CH_2OPO(OH)_2$, $CH_2=CCH_3 CO_2CH_2CH[OPO(OH)_2]CH_3$, $CH_2=CCH_3CO_2CH_2CH_2CH_2OPO(OH)_2$, and $CH_2=CCH_3CO_2CH_2CHOHCH_2OPO(OH)_2$.

Small amounts of acid-functional copolymerizable monomer, such as methacrylic acid and/or acrylic acid, are typically included in preparing polymeric latexes to confer colloidal stability. As noted above, in one embodiment of the present invention, preparation of polymeric latex particles from monomer mixture including itaconic acid is preferred. In another preferred embodiment, a relatively large amount of acid-functional copolymerizable monomer, such as methacrylic acid, for example, at least about five percent by weight of total polymer solids, and preferably at least about ten percent by weight of total polymer solids, is included in the monomer mix from which the polymeric latex particles are prepared. In yet another presently preferred embodiment, the polymerization is carried out so as to preferentially provide acid-functionality proximate the surface of the polymeric latex particles. In another presently preferred embodiment of the present invention, as noted above, the polymeric latex employed is polymerized from monomer mixture including at least one phosphoric acid partial ester derivative of a (meth)acrylic acid ester, preferably including a dihydrogen phosphate monoester.

In the emulsion copolymerization of ethylenically unsaturated monomers including minor amounts (such as less than about ten percent by weight) of ethylenically unsaturated carboxylic acid-functional comonomers such as (meth) acrylic acid, the resulting polymeric acid groups may be buried inside the colloidal polymeric particles produced by the polymerization and consequently inaccessible to species dissolved in the aqueous phase, or the polymeric acid groups may be at or near the surface of the particles, or even present in the aqueous phase in the form of water-soluble polymer. In addition, some of the acid-functional monomer may remain unpolymerized. This residual monomer is ususally to be found in the aqueous phase. Acid functionality which is at or near the surface of the particles (that is, proximate the surface of the polymeric latex particles) can be measured by potentiometric or conductometric titration techniques.

For example, if the polymeric latex particles are treated with ion-exchange resin and then titrated conductometrically, the amount of carboxylic acid at or near the surface of the particles can be measured as described in H.J. Van den Hul and J. W. Vanderhoff, Electro. Chem. Interfac. Electrochem., 37 161-182 (1972). High levels of surface carboxylic acid promote the adsorption process of this invention.

For the same mixture of monomers, the amount of surface carboxylic acid groups in the resulting polymeric latex particles depends on the specific emulsion polymerization employed. A number of factors can be important, including the particle size of the resulting polymeric latex, the pH of the polymerization medium, how the monomer is added to the polymerization reactor, and the choice of carboxylic acid monomer. For instance, if a mixture of 50 percent by weight butyl acrylate, 49 percent methyl methacrylate, and one percent methacrylic acid is gradually added to a polymerization reactor after the polymerization has been initiated, such as in a conventional gradual addition process, to give 200 nm polymer particles, titration indicates that about 25 percent of the total methacrylic acid is "surface acid," at or near the surface of the polymeric latex particles. If acrylic acid is substituted for methacrylic acid, the surface acid can increase. Similarly, if the process is altered so that all the monomer is added to the reactor, and the polymerization is then initiated, as is practical in a small-scale batch process, the surface acid can be found to be somewhat higher. In the present application, a process which preferentially provides acid functionality proximate the surface of the polymer latex particles is one which provides greater surface acid functionality than a conventional gradual addition process, or a conventional "single shot" batch process (such as a conventional process in which base is not added to the polymerization mix and the acidic functional groups consequently remain substantially nonionized through the polymerization process), as determined by potentiometric titration.

There are a number of ways known in the art for increasing the fraction of the acid that becomes surface acid. For example, if enough base is added during the polymerization to partially neutralize the carboxylic acid, the surface acid can be increased measurably. However, higher levels of base can decrease surface acid. If the carboxylic acid monomer is added to the reactor in a nonuniform manner, the amount of surface acid can be increased. Examples of nonuniform carboxylic acid monomer additions that increase surface acid are described in K.L. Hoy, J. Coat. Tech., 51 27-41 (1979).

Other types of copolymerizable functional monomers can also be included, depending on the ultimate application for which the product produced by the process of the present invention is intended. For example, small amounts of adhesion-promoting copolymerizable monomers can also be included. Examples of other types of functional monomers include hydroxy-functional monomers such as 2-hydroxethyl (meth)acrylate, amino-functional monomers such as dimethylaminoethyl (meth)acrylate, epoxy-functional monomers, such as glycidyl methacrylates and the like.

Examples of synthetic polymeric latexes which can be used include acrylic copolymer latexes, such as butyl acrylate/methyl methacrylate/acid and ethyl acrylate/methyl methacrylate/acid copolymer latexes; vinyl acetate homopolymer and copolymer latexes, including ethylene/vinyl acetate copolymer latexes, styrene/butadiene copolymer latexes, and the like.

By selecting the type and concentration of monomers having known glass transition temperatures and acid functionalities, polymeric latexes having properties useful in the process of the invention can be prepared.

The particle size, particle size distribution, and molecular weight of the polymeric latex can be selected by the choice of a particular polymerization process, as for example through the use of particular initiator and chain transfer systems, as is well known in the polymerization arts. The average particle size and the molecular weight of the polymeric latex are important with regard to both the adsorption onto the inorganic material particles, as well as with respect to the properties of the polymeric latex when it is employed as a binder in the the fully formulated aqueous composition including the composite particles.

Preferably, the polymeric latex used in the process of the present invention of adsorbing onto the inorganic material particles has an average particle diameter in the range of from approximately four times the average particle diameter of the inorganic material particles down to 20 nm. For example, if titanium dioxide particles are to be used, and those particles have an average particle size of 200 nanometers, the polymeric latex particle should have an average particle size in the range of from 20 to less than about 800 nanometers. By "average particle size" or "average particle diameter" is meant an average determined experimentally by the quasielastic light scattering technique, such as provided, for example, by the Model BI-90 Particle Sizer, of Brookhaven Instruments Corp.

The inorganic material particles, such as titanium dioxide particles, can be pretreated to provide inorganic surface coatings, such as coatings of silica, aluminum oxide, or mixtures of silica and aluminum oxide, on titanium dioxide particles. In addition, small molecular species, such as silanes or titanates, can be adsorbed on and reacted with surface of the titanium dioxide particles, and the resulting surface sites can be subsequently modified chemically to provide surface charges. Examples of such species include N-2-aminoethyl-3-aminopropyltrimethoxy-silane, 3-aminopropyltrimethoxysilane, 3-methacryloxypropyl-trimethoxysilane, and vinyltriacetoxysilane. Alternatively, other species can be simply adsorbed to the surface of the inorganic material particles. The most important examples of these are low molecular weight polyelectrolytes such as conventional pigment dispersants.

Examples of suitable anionic polyelectrolyte pigment dispersants for use in the process of the present invention include polyacrylic acid, polymethacrylic acid, copolymeric acids including copolymerized maleic acid, polyphosphates such as potassium tripolyphosphate, and the like.

While the chemical composition of a polymeric latex binder is important for achieving the resultant properties of the coating or film when the polymeric latex also acts as the binder, the glass transition temperature and amount of acid functionality in the polymeric latex can also be important for the purpose of the invention. Hard, irreversibly absorbing polymeric latex particles, preferably having an average particle diameter of from about 50 nm to 80 nm, are preferred in one embodiment of this invention. Soft, irreversably adsorbing polymeric latex particles preferably having a particle diameter of from about 100 nm to about 400 nm are preferred in another embodiment. Further, the amount of acid functionality at the surface of the polymeric latex particles is believed to be especially important. In a presently preferred embodiment of the present process, a polymeric latex is employed by a process which preferentially provides acid functionality at the surface of the polymer latex particles. Examples of polymerization processes which preferentially provide surface acid are described in K. L. Hoy, J. Coat. Tech. 51 27-41 (1979).

The presence of conventional polyelectrolyte dispersants has a significant effect on the adsorption of the selected polymeric latex on the inorganic material particles in the process of the present invention. While low concentrations of conventional water-soluble polyelectrolyte dispersants, for example in the case of titanium dioxide, on the order of about 0.2 weight percent or lower, have little adverse effect on the adsorption of selected polymeric latexes onto inorganic material particles surfaces, the use of higher concentrations of these conventional water-soluble polyelectrolytes dispersants can have a significant adverse effect upon adsorption unless the polymeric latex is carefully selected.

In some cases, it is possible to practice the process of the present invention without employing a pigment dispersant to disperse the inorganic material particles, although it is generally preferred that a pigment dispersant be used.

In one presently preferred embodiment of the present invention, an emulsion polymerization process known to provide acid functionality preferentially at the surface of the polymeric latex particles is employed to prepare the polymeric latex for adsorption on the inorganic material particles, such as titanium dioxide particles. In this case, the level of polyelectrolyte dispersant in the pigment dispersion and the formulated coating can be higher, such as up to one percent or more of the weight of the inorganic material depending on the specific polyelectrolyte dispersant employed. In this case, a weakly adsorbing polyelectrolyte dispersant, such as Tamol® (trademark of Rohm and Haas Company) SG-1 dispersant (ammonium salt of copolymer of a carboxylic acid monomer and a hydrophilic comonomer) can be employed at a high level such as one percent, while a strongly adsorbing polyelectrolyte dispersant such as a polyacrylic acid dispersant, such as Tamol 731 dispersant (sodium salt of polymeric carboxylic acid), which strongly adsorbs to the surface of the titanium dioxide particles, and which displaces weakly adsorbed polyelectrolyte dispersants from the surface of titanium dioxide particles, is preferably used at low levels.

In another presently preferred embodiment of the present invention, an emulsion polymerization process is used to prepare a polymeric latex from monomer mixture including one or more ethylenically polymerizable derivatives of phosphoric acid, such as one or more partial esters of phosphoric acid and 2-hydroxyethyl methacrylate. Examples of such partial esters are given above and include the monoester of phosphoric acid with hydroxyethyl methacrylate, the diester of phosphoric acid with hydroxyethyl methacrylate, and mixture thereof. The resulting phosphoric acid ester-functional polymeric latex particles adsorb to inorganic material particles more strongly than polymeric latex prepared from monomer mixture which does not include phosphoric acid ester-functional monomer.

The process of the present invention can significantly increase the hiding of titanium dioxide containing emulsion paint formulations (as determined by measuring the scattering coefficient of the paint) of the same PVC compared with the scattering coefficient of a paint formulation prepared by the use of conventional polyelectrolyte dispersants. An alternate way of expressing this improvement is that the process of the invention permits the reduction of the PVC of a 20% PVC titanium dioxide paint formulation by 20 percent while achieving the same scattering coefficient or degree of hiding as can be obtained by the use of a conventional polyelectrolyte pigment dispersant.

Furthermore, the improved performance of paint formulations prepared by the present process is achieved even in the presence of substantial amounts of large particle size extenders, such as calcium carbonate and alumino silicate, typically employed in such formulations. In this regard the improved hiding is obtained by the controlled adsorption of the primary pigment, the titanium dioxide. This improvement is not lost upon the incorporation of other types of inorganic or organic particles, such as extender pigment particles.

In addition, the improved hiding achievable by use of the process of this invention is realized when the coating formulation is prepared with conventional thickeners of the associative and non-associative types; this improvement is not dependent upon the selected thickener. This result is surprising and contrary to the result typically encountered when paints are formulated using conventional polyelectrolyte dispersants. In such conventional systems the hiding property of the formulated paint can vary greatly as a function of the thickener employed. The controlled adsorption process of the invention therefore offers paint formulators a greater choice in selecting thickeners for the final paint formulation without concern over the choice of thickener adversely affecting the final hiding properties of the paint.

Furthermore, in addition to improving the hiding of paint formulations, the process of this invention also has been found to advantageously improve the early blister resistance, metal marking resistance, gloss, high shear viscosity, and scrub resistance of paint formulations compared with paint formulations dispersed with conventional polyelectrolyte dispersants, as well as improving the corrosion resistance of paint formulations.

In addition to the titanium dioxide particles, which are typically of relatively small particle size, on the order of 200-250 nm, other pigment particles, such as the large particle size extender pigment particle typically included in many types of coating formulation to reduce new material costs, can also be employed in addition to the titanium dioxide pigment particles in the process of the present invention. Examples of large particle size extender pigment particles which can be used include calcium carbonate, alumio-silicate, amorphous silicon, and the like.

Similarly, the aqueous medium in which the titanium dioxide particles are ground with the polymeric latex dispersant can also include water-miscible solvents, such as glycols and glycol ethers, such as are conventional in the coatings arts. Examples of water-miscible solvents employed include propylene glycol, ethylene glycol, ethylene glycol monomethyl ether, and the like.

Aqueous coating compositions are frequently formulated at alkaline pH to stabilize anionically charged latex binder against agglomeration and for other reasons. The principles of formulating aqueous coating compositions are reviewed, for example, in <u>Formulation of Organic Coatings</u> (N.I. Gaynes ed. D. Van Nostrad Co. Inc. Princeton, NJ 1967) at pp. 189-230.

The present invention provides aqueous dispersions of composite particles which can be used in a variety of applications. In some cases, a "soft" (i.e. low effective glass transition temperature, such as on the order of 0 °C to 10 °C) polymeric latex can be added to the dispersion of composite particles, typically with the further addition of other components, the soft polymeric latex serving as binder for the composition. Often the binder forming latex polymer particles contain carboxyl functional groups. Under suitable conditions, the carboxyl groups are ionized and the resultant charges on the latex particle surface electrostatically stabilize the latex against premature agglomeration. Often a volatile base, typically ammonia, is used to adjust the pH of the coating composition. When the coating composition is applied to a substrate to be coated, the volatile base is lost and the pH of the coating composition drops, destabilizing the latex particles of the binder and thus encouraging agglomeration to form a continuous binder film.

In addition to binder-forming polymeric latex particles and composite polymeric latex-inorganic material particles, aqueous coating compositions prepared according to the process of the present invention can include typical coatings ingredients. For example, they can include extender pigments as noted above such as calcium carbonate, amorphous silica, and the like; defoamers; biocidal agents such as zinc oxide, 2-N-octyl-4-isothiazole-3-one, and phenyl mercuric acetate; coalescing agents such as diethylene glycol monoethyl ether acetate and ethylene glycol monobutyl ether acetate; plasticizers such as dialkyl phthalates including dibutyl phthalate, dioctyl phthalate and the like; freeze-thaw stabilizers such as ethylene glycol, propylene glycol and diethylene glycol; nonionic wetting agents such as polyethylenoxylates of fatty acids, alkanols, alkylphenols, and glycols; polyelectrolyte pigment dispersants at low levels; thickeners such as polyelectrolyte and cellulosic thickeners; rheology control agents such as associative thickeners and the like; colorants such as colored pigments and dyes; perfumes; cosolvents and the like.

In the examples which follow, the following abbreviations are used:

AA    acrylic acid
MAA  methacrylic acid
IA      itaconic acid
EA     ethyl acrylate
BA     butyl acrylate
MMA methyl methacrylate
PEM  phosphoethyl methacrylate

The illustrative examples which follow illustrate the process of the present invention as a function of the parameters of the selected emulsion polymer and the adsorption achieved. These examples will aid those skilled in the art in understanding the present invention; however, the present invention is in no way limited thereby. In the examples which follow, percentage composition is by weight, unless otherwise noted.

Examples 1 - 3

A typical conventionally dispersed 20% PVC gloss paint (Comparative Example 1) was prepared according to the following formulation. Pigment grind:

| Components | Weight (g) |
|---|---|
| water | 30 |

(continued)

| Components | Weight (g) |
|---|---|
| propylene glycol | 20 |
| Colloid 643 defoamer | 1 |
| Tamol® 731 dispersant (25% solids) | 8.19 |
| Ti-Pure® R-900 titanium dioxide | 204.72 |

Tamol 731 is a polycarboxylate dispersant (Tamol is a trademark of Rohm and Haas Company). Tamol 731 is a sodium salt of polymeric carboxylic acid. Pigment dispersion with one percent by weight polymeric carboxylic acid dispersant as in this case is considered conventional. Ti-Pure is a trademark of Du Pont de Nemours Co. Ti-Pure R-900 is a coatings grade of rutile titanium dioxide. These components were milled on a high speed disk disperser to form a pigment grind, and were let down at a slower speed with the following:

| Components | Weight (g) |
|---|---|
| Rhoplex® AC-61 polymer latex | 493.75 |
| Colloid 643 defoamer | 4 |
| Texanol® coalescent | 22.96 |
| Triton® GR-7M surfactant | 2 |
| propylene glycol | 59 |
| Nuosept® 95 preservative | 6 |
| water and Natrosol® 250 MR cellulosic thickener | 165.07 |

Rhoplex is a trademark of Rohm and Haas Company. Texanol is a trademark of Eastman Kodak Co. Triton is a trademark of Rohm and Haas Company. Nuosept is a trademark of Nuodex, Inc. The mix is thickened to a Stormer viscosity of 80 KU by addition of an aqueous solution of the cellulosic thickener, and the pH of the mix is adjusted to 9 by addition of ammonia.

To provide Example 1, the paint formulation process of Comparative Example 1 was repeated replacing the 493.75 g of Rhoplex AC-61 with a mixture of 419.66 g Rhoplex AC-61 (46.5% solids) and 92.04 g of a polymeric latex having a glass transition temperature of 65°C, a particle size of 71 nm, and having 6% phosphoethyl methacrylate (Latex A, 37.4% solids). The total weight of water was adjusted to maintain the same total solids in the final paint.

The paint formulation process of Example 1 was repeated with the 1% Tamol 731 decreased to 0.5% to give Example 2.

The paint formulation process of Example 1 was repeated substituting Tamol SG-1 for Tamol 731 to give Example 3.

For each paint, a sample was removed just before addition of the cellulosic thickener, allowed to equilibrate for two hours, diluted 1 part to 3 parts with water, and centrifuged. The concentration of unadsorbed latex in the supernatant was determined gravimetrically and used to calculate the milligrams of latex adsorbed per gram of titanium dioxide.

Kubelka-Munk scattering coefficients were determined for all paints using a modification of ASTM D 2805-70. Results given in Table I.

Table I

| Example | Dispersant | Binder | Adsorption (mg/g) | Scattering Coefficient |
|---|---|---|---|---|
| Comp. 1[1] | 1% Tamol 731 | AC-61 | 3 | 7.26 |
| 1 | 1% Tamol 731 | AC-61/Latex A | 199 | 7.77 |
| 2 | 0.5% Tamol 731 | AC-61/Latex A | 200 | 8.18 |
| 3 | 1% Tamol SG-1 | AC-61/Latex A | 225 | 8.27 |
| Comparative example. | | | | |

The results for Example 1 in Table I demonstrate that a polymeric latex with high acid functionality at the latex particle surface when blended with a conventional latex will preferentially adsorb on titanium dioxide under conditions where the conventional latex will not adsorb. Thus Comparative Example 1 shows that Rhoplex AC-61 does not adsorb on titanium dioxide in the presence of 1% Tamol 731 while Example 1 shows that a blend of Latex A with Rhoplex AC-61 provides substantial adsorption and increased hiding as reflected by the Kubelka-Munk scattering coefficients. The latex adsorption of 199 mg/g measured for Example 1 is close to value of 169 mg/g measured independently for Latex A in the absence of Rhoplex AC-61 and is significantly below the value of about 400 mg/g measured independently for Rhoplex AC-61. The lower adsorption observed for Latex A is consistent with its smaller 71 nm particle size compared to the 150 mm Rhoplex AC-61.

Comparison of the results for Examples 2 and 3 with those for Example 1 shows that amount and type of dispersant used to prepare the titanium dioxide pre-disposed has a significant effect on the behavior of the paint made by letting down this pre-dispersion with a blend of Rhoplex AC-61 and polymeric Latex A. Either decreasing the amount of Tamol 731 (Example 2) or replacing the Tamol 731 with Tamol SG-1, which has a lower proportion of acid functionality and is believed to be more weakly bound to the titanium dioxide surface (Example 3), provides greater adsorption and increased hiding.

Examples 4 - 9

A series of polymeric latexes of varying particle size and glass transition temperature and containing varying amounts of acidic monomer, as given in Table II, were prepared. Next, a series of 35% PVC titanium dioxide grinds were prepared using Ti-Pure R-900 titanium dioxide dispersed with 0.05% by weight Tamol 731 dispersant. In preparing these grinds, a conventional Tamol 731-dispersed grind was prepared first; polymeric latex was then added and the mixture milled on a high speed disk disperser for 15 minutes.

The polymeric latexes were prepared using a gradual-addition, batch process, with all of the acidic monomer being added in the monomer mixture, except in the case of Example 6, in which the acidic monomer was added in a manner known to provide a preferred distribution of acid functionality at the surface of the polymeric latex.

Immediately after grinding a sample was removed, diluted 1 part to 3 parts with water, and centrifuged. The concentration of unadsorbed latex in the supernatant was determined gravimetrically and used to calculate the milligrams of latex adsorbed per gram of titanium dioxide.

To determine the reversibility of the latex adsorption, 1% polyacrylic acid (Tamol 963 dispersant) was added to a portion of the remaining grind and the mixture stirred for 15 minutes. After equilibrating for 1 week, latex adsorption was determined as before. This procedure was carried out immediately after the grind was made and after it had been allowed to equilibrate for 1 day and 1 week. The results are given in Table II.

These results in Table II show that the ability of polyacrylic acid to desorb previously adsorbed latex decreases with increasing surface acidity of the latex.

Surface acidity is controlled in these Examples 4-9 by varying the level of acidic monomer (Comparative Example 3 and Examples 4-5), or by varying the polymerization process to enhance the surface acid (Example 6), but other methods of influencing latex surface acidity should be equally satisfactory.

The results in Table II also demonstrate that the type of acid functionality greatly influences reversibility. Thus replacing methacrylic acid with phosphoethyl methacrylate results in a decrease in desorption (Examples 4 and 8). A similar decrease in reversibility is obtained with itaconic acid (Example 9).

Table II

| Ex. | Part. Size (nm) | Tg (°C) | Acidic Monomer | Total Latex (mg/g) | Adsorption (mg/g) | After Immed. | % Desorption[3] Equilibrat. | |
|-----|----|----|---------|-----|-----|-----|------|------|
| | | | | | | | 1day | 1Week |
| 4 | 64 | 51 | 5% MAA | 158 | 137 | 91 | 67 | 20 |
| 5 | 66 | 52 | 10% MAA | 158 | 132 | 95 | 7 | 2 |
| 6 | 64 | 51 | 5% MAA | 158 | 137 | 64 | 1 | 0 |
| 7 | 73 | 94 | 5% MAA | 158 | 152 | 109 | 105 | 97 |
| 8 | 56 | 54 | 2% MAA+ 2% PEM[1] | 158 | 156 | 23 | 7 | 3 |
| 9 | 69 | 50 | 2% IA[2] | 158 | 157 | 22 | -1 | -1 |

1. PEM = phosphoethyl methacrylate.

2. IA = itaconic acid.

3. Desorption values less than 0 and greater than 100 reflect experimental error in the desorption measurement and imply no desorption and complete desorption respectively.

Example 10

A typical conventionally dispersed pigment grind containing one percent Tamol SG-1 polymeric carboxylic acid dispersant by weight on pigment was prepared according to the following formulation:

| Components | Weight (g) |
|---|---|
| water | 70 |
| propylene glycol | 20 |
| Colloid 643 defoamer | 1 |
| Tamol SG-1 dispersant (35% solids) | 5.85 |
| Ti-Pure R-900 titanium dioxide | 204.72 |

These components were milled on a high speed disk disperser to form a pigment grind. 237.6 g of a 120 nm polymeric latex (38.0% solids) prepared using a gradual-addition, batch process and having a monomer composition of 5 BA/93 MMA/2 MAA was then added and the mixture milled for 15 minutes to give Comparative Example 2.

After equilibrating for 1 hour, a sample was removed, diluted 1 part to 3 parts with water, and centrifuged. The concentration of unadsorbed latex in the supernatant was determined ravimetrically and used to calculate the milligrams of latex adsorbed per gram of titanium dioxide. The resulting value for Comparative Example 2 was 25 mg/g.

Example 10 was prepared in the same manner using 239.5 g of a 127 nm polymeric latex (37.7% solids) prepared using a gradual addition, batch process and having a monomer composition of 5 BA/89 MMA/2 MAA/4 phosphoethyl methacrylate. The measured adsorption for Example 10 was 219 mg/g.

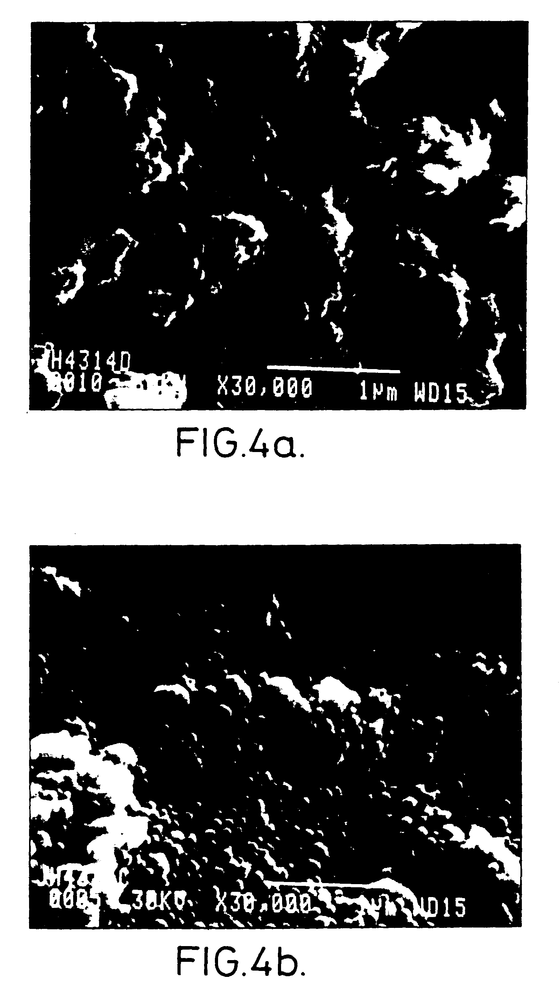

A portion of each grind was diluted to about one percent by volume with water, a small drop placed on a standard SEM sample holder, and the water allowed to evaporate. The dried samples were then sputter coated with gold and examined via scanning electron microscopy. The resulting micrographs (magnification of 30,000:1) are shown in Figure 4a (Example 10) and Figure 4b (Comparative Example 2).

Figure 4a shows "raspberry"-shaped composite particles resulting from the adsorption of the small latex particles on the surfaces of the larger titanium dioxide particles. By contrast, the smooth titanium dioxide particles and the unadsorbed latex particles seen in Figure 4b demonstrate the absence of such adsorption for a conventional phosphoethyl methacrylate-free latex. These micrographs provide a direct visual confirmation of the adsorption process of the present invention.

Example 11

An acrylate polymeric latex emulsion was prepared having a calculated glass transition temperature of about 14 °C, a particle size of 161 nm, and total solids of about 45 percent by weight using a single-stage, gradual-addition thermal process from monomer including 1.3 percent by weight methacrylic acid and one percent by weight phosphoethyl methacrylate (Latex B). A pigment grind was prepared by grinding together at high speed 200 parts by weight TiPure R-900 titanium dioxide, 8 parts by weight Tamol 731 pigment dispersant, 1 part by weight Colloid 643 defoamer, 20 parts by weight propylene glycol and 30 parts by weight water. 495.6 parts by weight of Latex B were mixed at low speed with 7.57 parts by weight water and 22.64 parts by weight Texanol. Subsequently, to the Latex B/Texanol mixture were added 9.70 parts by weight Triton X-405 surfactant, 49.57 parts by weight water, 4 parts by weight Colloid 643 defoamer, 59 parts by weight propylene glycol, and 6 parts by weight Nuosept 95 preservative. To this mixture was added the grind, and subsequently, 100.4 parts by weight of a 5.0 percent by weight solution of Natrosol 250 MR hydroxycellulose thickener were added to provide a paint (Example 11) with a PVC of 20, a calculated volume solids of 32 percent, and a calculated weight solids of 42.1 percent. The hiding and gloss of the paint were evaluated and compared with a control paint prepared from an polymeric latex made using a similar process but omitting the phosphoethyl methacrylate (Comparative Example 3), the results being given in Table III, and showing improved hiding and gloss using the process of the present invention.

Table III

| Example | Hiding | 20° Gloss | 60° Gloss |
|---|---|---|---|
| Comp. 31 | 6.9 | 14 | 54 |
| 11 | 7.8 | 24 | 63 |
| 1. Comparative example | | | |

Examples 12 - 13

A multi-stage gradual addition process was employed to prepare an acrylate copolymer emulsion from monomer including 1.9 percent by weight methacrylic acid. The polymeric latex, Latex C, contained 44.7% solids with an average particle diameter of 166 nm. Latex C is believed to have a substantial proportion of acid functionality at the surface of the latex particle as determined by potentiometric titration. A modification of the process was employed to prepare an acrylate copolymer emulsion, Latex D, from monomer having the same composition but which is believed to result in an emulsion polymer having a substantially lower proportion of acid functionality at the polymer surface. Latex D contained 44.6% solids with an average particle diameter of 158 nm.

A tinted titanium dioxide pre-dispersion in which the dispersant (Tamol SG-1 dispersant) level was 1% (on titanium dioxide) was prepared according to the following formulation.

| Component | Weight (g) |
|---|---|
| water | 169.9 |
| Nopco NXZ defoamer | 3.0 |
| Tamol SG-1 (35%) dispersant | 17.1 |
| Ti-Pure R-900 titanium dioxide | 600 |

The pigment grind components were milled on a high speed disk disperser (Laboratory Dispersator, Model 84, Premier Mill Corp.) at 3000 rpm for 20 minutes. At a lower speed 30.0 g of Colortrend (trademark of Tenneco Inc.) 888-9907 B-Lamp Black was mixed in.

To 62.9 g of the tinted pre-dispersion was added with stirring 169.4 g of Latex C binder (preadjusted to pH 6.0 with 28% aqueous ammonia) and 9.3 g of water. To 120.8 g of the resulting mixture was added 5.2 g Texanol coalescent, 7.2 g propylene glycol, and 24.0 g of a 2.5% aqueous solution of Natrosol 250 MR. The final pH of this mixture was adjusted to 7.5 with 28% aqueous ammonia to yield a paint (Example 12) with 14% volume concentration of titanium dioxide in the dry paint and a volume solids content of ca. 30% in the wet paint.

The above procedure was repeated using 169.7 g of Latex D binder (preadjusted to pH 6.0) instead of Latex C and 9.0 g of water to form an analogous paint (Comparative Example 4).

A tinted pigment dispersion was prepared as in Example 12 except that 17.3 g of Tamol 963 dispersant (35%) (sodium salt of polyacrylic acid) instead of Tamol SG-1 dispersant was used to give a one percent Tamol 963 dispersion.

The paint formulation process of Example 12 was repeated substituting the Tamol 963 pigment dispersion for the Tamol SG-1 pigment dispersion using Latex C to provide Example 13 and Latex D to provide Comparative Example 5.

After four days the paints were evaluated for latex adsorption and for differences in titanium dioxide scattering efficiency. Adsorption was measured by diluting one part of the paint with seven parts by weight of water, centrifuging, and determining the concentration of the unadsorbed latex in the supernatant gravimetrically.

The relative scattering was determined by measuring the Y-reflectance of the tinted paints with a 45'/0' reflectometer (Colorguard, Gardner Instruments). From light scattering theory, the ratio of the scattering coefficient, S, and the adsorption coefficient, K, is given by:

$$S/K = 2R/(1-R)^2$$

where R is the reflectance from an infinitely thick layer of dry paint film. At a given titanium dioxide PVC, differences in Y-reflectance of equally tinted paint films arise solely from differences in titanium dioxide scattering efficiency. Titanium dioxide dominates the scattering while the tinting agent dominates the adsorption which can then be considered constant. The percentage difference in scattering coefficient exhibited by two equally tinted paints is then given by:

$$((S_2 - S_1)/S_1) \times 100 = ((R_2(1 - R_1)^2/R_1(1 - R_2)^2)-1) \times 100$$

Results are given in Table IV. The results in Table IV show that the Latex C polymeric binder (Example 12) provides substantially higher adsorption on titanium dioxide than does the Latex D polymeric binder (Comparative Example 4). The difference in Y-reflectance represents 48% higher scatter from the titanium dioxide. This result demonstrates the advantage of a high acid functionality at the latex particle surface on the adsorption process of this invention. High surface acid functionality is believed to promote adsorption to titanium dioxide thereby enhancing the ability of the latex binder to compete with the polyelectrolyte dispersant for the titanium dioxide surface. The results for Example 13 and Comparative Example 5 show no difference between the two in adsorption and essentially no difference in Y-reflectance.

Comparison of the results for Examples 12 and 13 show that the dispersant employed to prepare the titanium dioxide predispersion has a significant effect in this case on the adsorption of the polymeric latex dispersant Latex C with high surface acid functionality. When the polyelectrolyte Tamol 963 dispersant was employed, it was not displaced from the surface of the titanium dioxide particles to permit adsorption of the polymeric Latex C. However, this same polymeric latex was effective to displace the Tamol SG-1 dispersant, which has a lower proportion of acid functionality on a weight basis than the Tamol 963 dispersant and is believed to be more weakly bound to the titanium dioxide surface.

Table IV

| Example | Latex | Dispersant | Adsorption (mg/g) | Y-Reflectance |
|---|---|---|---|---|
| 12 | C | 1% Tamol SG-1 | 720 | 0.557 |
| C. 4[1] | D | 1% Tamol SG-1 | 110 | 0.492 |
| 13 | C | 1% Tamol 963 | 50 | 0.544 |
| C. 5[1] | D | 1% Tamol 963 | 50 | 0.541 |

1. Comparative example.

Example 14

A multi-stage gradual addition process was employed to prepare an acrylate copolymer emulsion from monomer including about 2.5 percent by weight methacrylic acid. The polymeric latex, Latex E, contained 44.5% solids with an average particle diameter of 150 nm, and was prepared by a process believed to provide a substantial proportion of acid functionality at the surface of the latex particle as determined by potentiometric titration. A modification of the process was employed to prepare an acrylate copoymer emulsion, Latex F, from monomer having the same composition, but which is believed to result in an emulsion polymer having a substantially lower proportion of acid functionality at the polymer surface. The latex, Latex F, contained 44.8% solids with an average particle diameter of 159 nm.

To 86.1 of Latex E (preadjusted to pH 9.0 with aqueous ammonia) was added 31.5 g of a titanium dioxide-Tamol SG-1 dispersion prepared as in Examples 12-13, 3.3 g of deionized water, 1.9 g of Texanol coalescent, 7.2 g of propylene glycol, and 24.0 g of a 2.5% aqueous solution of Natrosol 250 MR. These ingredients were well mixed to yield a paint (Example 14) with 14% PVC of titanium dioxide and volume solids of ca. 30%.

To 85.2 g of Latex F (preadjusted to pH 9.0 with aqueous ammonia) was added 31.5 g of the same titanium dioxide-Tamol SG-1 dispersion, 6.2 g of deionized water, 1.9 g of Texanol coalescent, 7.2 g of propylene glycol, and 24.0 g of a 2.5% aqueous solution of Natrosol 250 MR. These ingredients were well mixed to yield a paint (Comparative Example 8) with 14% PVC of titanium dioxide and volume solids of ca. 30%.

Example 14 and Comparative Example 6 were evaluated for polymeric latex adsorption after one hour, one day, and five days of equilibration. Both paints were also evaluated for Y-Reflectance after one day and nine days of equilibration in the same manner as Examples 12 - 13. The results are given in Table V.

Table V

| | | Adsorption (g/g $TiO_2$) | | | Y-Reflectance | |
|---|---|---|---|---|---|---|
| Example | Latex | 1 hour | 1 day | 5 days | 1 day | 9 days |
| 14 | E | 0.01 | 0.17 | 0.23 | 0.530 | 0.536 |
| Comp. 6[1] | F | -0.05 | -0.09 | -0.03 | 0.502 | 0.498 |
| 1. Comparative example. | | | | | | |

These results demonstrate that in case of a polymeric latex with high acid functionality at the latex particle surface, such as Latex E, the adsorption process is not instantaneous but occurs over the time scale of days. After one day a paint prepared with a high surface acid functionality polymeric latex binder, Latex E, had 18.5% higher light scatter than a paint prepared with a low surface acid functionality polymeric latex, Latex F. After nine days this difference increased to 26%.

Example 15

To 1300 g of deionized water stirred under a nitrogen atmosphere at 85°C was added 4 g of ammonium persulfate in 24 g of deionized water and 60 g of a seed latex. A monomer emulsion prepared from 600 g of deionized water, 28 g of Siponate DS-4, 900 g of butyl acrylate, 876.6 g of methyl methacrylate and 23.4 g of methacrylic acid was added over a 200-min period along with 2 g of ammonium persulfate in 100 g of deionized water maintaining 85°C. When the reaction was complete, the dispersion was cooled and filtered. The product (Latex G) had 45.6% solids and pH 3 with an average diameter of 196 nm.

The process used to prepare Latex G was repeated, except that 18 g of the methyl methacrylate was replaced with an equal weight of Kayamer® (trademark of Nihon Kayaku Co. Ltd.) PM-1 (monomer mixture containing around 52% of the monoester of hydroxyethyl methacrylate and phosphoric acid and 33% of the diester). The product (Latex H) had 46.1% solids and pH 2.6 with an average particle size of 185 nm.

A tinted titanium dioxide dispersion was prepared as in Examples 12-13 from 180 g of deionized water, 7.2 g of Tamol 731 dispersant (25% solids), 3.0 g of Nopco NXZ defoamer, 600 g of Ti-Pure R-902 and 30 g of Colortrend lamp black dispersion. Samples of Latex G and Latex H were adjusted to pH 9 with 28% aqueous ammonia and used to formulate paints with 14% volume concentration of Ti-Pure R-902 pigment in the dry paint: To 29.5 g of R-902 dispersion was added 7.8 g of water, 83.9 g of the pH 9 Latex G, 2.6 g of Texanol coalescent, 7.2 g of propylene glycol and 24.0 g of 2.5% aqueous Natrosol 250 MR hydroxyethyl cellulose thickener. Latex H was formulated similarly only 82.8 g were required and 8.9 g of water. The two paints were allowed to equilibrate for seven days and then the adsorption of polymeric latex on titanium dioxide in the paints and their Y-reflectance was measured as above. The results are given in Table VI.

Table VI

| Example | Latex | Adsorption (g/g $TiO_2$) | Y-Reflectance |
|---------|-------|--------------------------|---------------|
| Comp. 71 | G | 0.01 | 0.504 |
| 15 | H | 0.26 | 0.540 |
| 1. Comparative example | | | |

These results show that the standard binder (Latex G) is essentially non-adsorbing under these conditions. The phosphate-containing binder (Latex H) adsorbs substantially and the increased Y-reflectance that accompanies the adsorption corresponds to an increase in scattering efficiency of the titanium dioxide in the dry paint film of 25%.

Various modifications can be made in the details of the various embodiments of the compositions and processes of the present invention, all within the spirit and scope of the invention as defined by the appended claims.

**Claims**

1.  A process for preparing an aqueous dispersion of composite particles, the composite particles each comprising a plurality of selected polymeric latex particles adsorbed onto an inorganic material particle, the process comprising:

    a) dispersing inorganic material particles in an aqueous medium with a pigment dispersant, the average size of the inorganic particles being from 100 to 10000nm;
    b) preparing in the aqueous medium a dispersion or suspension of selected polymeric latex particles having an average size of from 20nm to four times the average size of the inorganic material particles and surface acid functionality with a pKa intermediate between weak and strong acids, and prepared by an emulsion polymerization process selected from the dass consisting of:

    1) emulsion polymerization processes employing a monomer mixture including at least one polymerizable ethylenically unsaturated acid-functional monomer selected from the class consisting of:

    A) itaconic acid; and
    B) dihydrogen phosphate esters of an alcohol, the alcohol containing a polymerizable olefinic group;

    2) emulsion polymerization processes providing acid-functionality proximate the surface of the polymeric latex particle; and
    3) emulsion polymerization processes employing a monomer mixture including at least one ethylenically unsaturated acid-functional monomer, the total weight of ethylenically unsaturated acid-functional monomer comprising at least ten percent by weight of the polymeric latex solids; and

    c) mixing the aqueous medium containing the inorganic material particles and the selected polymeric latex particles the selected polymeric latex particles adsorbing onto the inorganic material particles to provide the composite particles.

2.  A process according to claim 1 wherein the dihydrogen phosphate ester is selected from phosphoric acid monoester of 2-hydroxyethyl methacrylate, the phosphoric acid diester of 2-hydroxyethyl methacrylate, the phosphoric acid monoester of 3-hydroxypropyl methacrylate, or the phosphoric acid diester of 3-hydroxypropyl methacrylate.

3. Process according to claim 2 wherein the pigment dispersant is a polyelectrolyte, preferably poly(meth)acrylic acid, poly(meth)acrylic acid salts, polyelectrolyte copolymers of (meth)acrylic acid or salts of polyelectrolyte copolymers of (meth)acrylic acid; an inorganic polyelectrolyte; or a polyphosphate salt.

4. A process according to any preceding claim wherein the selected polymeric latex has an effective glass transition temperature greater than 20°C, preferably greater than 50°C.

5. The process claimed in any one of the preceding claims, wherein the average size of the polymeric latex particles is from one-half the average size of the inorganic material particles to equal to the average size of the inorganic material particles.

6. The process as claimed in any one of the preceding claims, wherein the average size of the inorganic material particles is from 200nm to 250nm, and the average size of the polymeric latex particles is from 20nm to 5,000nm, preferably 20nm to 1,000nm, even more preferably 50nm to 80nm.

7. The process claimed in claim 1, wherein the effective glass transition temperature of the selected polymeric latex is less than 20°C, and the average particle size of the selected polymeric latex is from 80nm to 600nm, preferably 100nm to 400nm.

8. The process claimed in any one of the preceding claims, wherein the inorganic material is titanium dioxide.

9. An aqueous dispersion of composite particles produced by the process claimed in any one of the preceding claims, the composite particles comprising a plurality of polymeric latex particles adsorbed to a titanium dioxide particle, the polymeric latex particles including dihydrogen phosphate ester functional groups.

10. The aqueous dispersion claimed in claim 9, wherein the polymeric latex particles are polymerized from monomer including at least on polymerizable dihydrogen phosphate-functional monomer.

11. The aqueous dispersion claimed in claim 10, wherein the at least one polymerizable dihydrogen phosphate-functional monomer is selected from dihydrogen phosphate esters of an alcohol, the alcohol including a polymerizable group selected from polymerizable vinyl groups and polymerizable non-vinyl olefinic groups.

12. The aqueous dispersion claimed in claim 11, wherein the at least one polymerizable dihydrogen phosphate-functional monomer is selected from the dihydrogen phosphate monoester of 2-hydroxyethyl methacrylate, and mixtures of the dihydrogen phosphate monoester of 2-hydroxyethyl methacrylate and the phosphoric acid diester of 2-hydroxyethyl methacrylate.

13. The aqueous dispersion according to any one of claims 9-12, wherein the at least one polymerizable dihydrogen phosphate-functional monomer is selected from dihydrogen vinylbenzylphosphates, $CH_2=CCH_3CO_2CH_2CH_2OPO(OH)_2$, $CH_2=CCH_3CO_2CH_2CH[OPO(OH)_2]CH_3$, $CH_2=CCH_3CO_2CH_2CH_2CH_2OPO(OH)_2$, and $CH_2=CCH_3CO_2CH_2CHOHCH_2OPO(OH)_2$.

14. A pigment slurry comprising the aqueous dispersion of composite particles produced by the process of any one of claims 1-8 or claimed in any one of claims 9-13.

15. A coating composition comprising the aqueous dispersion of composite particles produced by the process of any one of claims 1-8 or claimed in any one of claims 9-13.


**Patentansprüche**

1. Verfahren zur Herstellung einer wäßrigen Dispersion von Verbundteilchen, wobei die Verbundteilchen jeweils eine Vielzahl ausgewählter Polymerlatexteilchen, adsorbiert an einem Teilchen aus anorganischem Material, umfassen, wobei das Verfahren umfaßt:

a) Dispergieren von Teilchen aus anorganischem Material in einem wäßrigen Medium mit einem Pigmentdispergiermittel, wobei die mittlere Größe der anorganischen Teilchen 100 bis 10000 nm beträgt,

b) Herstellen in dem wäßrigen Medium einer Dispersion oder Suspension ausgewählter Polymerlatexteilchen mit einer mittleren Größe von 20 nm bis dem Vierfachen der mittleren Größe der Teilchen aus anorganischem Material und mit einer Oberflächen-Säurefunktionalität mit einem intermediären pKa zwischen schwachen und starken Säuren und hergestellt durch ein Emulsionspolymerisationsverfahren, ausgewählt aus der Klasse, bestehend aus:

1) Emulsionspolymerisationsverfahren unter Anwendung eines Monomergemisches, einschließlich mindestens eines polymerisierbaren, ethylenisch ungesättigten, säurefunktionellen Monomers, ausgewählt aus der Klasse, bestehend aus

A) Itaconsäure und

B) Dihydrogenphosphatestern eines Alkohols, wobei der Alkohol eine polymerisierbare Olefingruppe enthält;

2) Emulsionspolymerisationsverfahren, die eine Säurefunktionalität nahe der Oberfläche der Polymerlatexteilchen bereitstellen, und

3) Emulsionspolymerisationsverfahren unter Anwendung eines Monomergemisches, einschließlich mindestens eines ethylenisch ungesättigten säurefunktionellen Monomers, wobei das Gesamtgewicht an ethylenisch ungesättigtem, säurefunktionellem Monomer mindestens 10 Gew.-% der Feststoffe des Polymerlatex umfaßt, und

c) Vermischen des wäßrigen Mediums, das die Teilchen aus anorganischem Material und die ausgewählten Polymerlatexteilchen enthält, wobei die ausgewählten Polymerlatexteilchen an den Teilchen aus anorganischem Material unter Bereitstellung der Verbundteilchen adsorbiert werden.

2. Verfahren nach Anspruch 1, wobei der Dihydrogenphosphatester ausgewählt ist aus Phosphorsäuremonoester von Methacrylsäure-2-hydroxyethylester, dem Phosphorsäurediester von Methacrylsäure-2-hydroxyethylester, dem Phosphorsäuremonoester von Methacrylsäure-3-hydroxypropylester oder dem Phosphorsäurediester von Methacrylsäure-3-hydroxypropylester.

3. Verfahren nach Anspruch 2, wobei das Pigmentdispergiermittel ein Polyelektrolyt, vorzugsweise Poly(meth)acrylsäure, Poly(meth)acrylsäuresalze, Polyelektrolytcopolymere von (Meth)acrylsäure oder Salze von Polyelektrolytcopolymerenvon (Meth)acrylsäure, ein anorganischer Polyelektrolyt oder ein Polyphosphatsalz ist.

4. Verfahren nach einem vorangehenden Anspruch, wobei der ausgewählte Polymerlatex eine effektive Glasübergangstemperatur von größer als 20°C, vorzugsweise von größer als 50°C, besitzt.

5. Verfahren nach einem der vorangehenden Ansprüche, wobei die mittlere Größe der Polymerlatexteilchen von der Hälfte der mittleren Größe der Teilchen aus anorganischem Material bis übereinstimmend mit der mittleren Größe der Teilchen des anorganischen Materials ist.

6. Verfahren nach einem der vorangehenden Ansprüche, wobei die mittlere Größe der Teilchen aus anorganischem Material 200 nm bis 250 nm beträgt und die mittlere Größe der Polymerlatexteilchen 20 nm bis 5000 nm, vorzugsweise 20 nm bis 1000 nm, bevorzugter 50 nm bis 80 nm, beträgt.

7. Verfahren nach Anspruch 1, wobei die effektive Glasübergangstemperatur des ausgewählten Polymerlatex weniger als 20°C beträgt, und die mittlere Teilchengröße des ausgewählten Polymerlatex 80 nm bis 600 nm, vorzugsweise 100 nm bis 400 nm, beträgt.

8. Verfahren nach einem der vorangehenden Ansprüche, wobei das anorganische Material Titandioxid ist.

9. Wäßrige Dispersion von Verbundteilchen, hergestellt durch das Verfahren nach einem der vorangehenden Ansprüche, wobei die Verbundteilchen eine Vielzahl von Polymerlatexteilchen, adsorbiert an einem Titandioxidteilchen, umfassen und die Polymerlatexteilchen funktionelle Gruppen von Dihydrogenphosphatestern einschließen.

10. Wäßrige Dispersion nach Anspruch 9, wobei die Polymerlatexteilchen aus Monomer, einschließlich mindestens eines polymerisierbaren funktionellen Dihydrogenphosphatmonomers, polymerisiert sind.

11. Wäßrige Dispersion nach Anspruch 10, wobei das mindestens eine polymerisierbare dihydrogenphosphatfunktionelle Monomer ausgewählt ist aus Dihydrogenphosphatestern eines Alkohols, wobei der Alkohol eine polymerisierbare Gruppe, ausgewählt aus polymerisierbaren Vinylgruppen und polymerisierbaren nichtvinylolefinischen Gruppen einschließt.

12. Wäßrige Dispersion nach Anspruch 11, wobei das mindestens eine polymerisierbare dihydrogenphosphatfunktionelle Monomer ausgewählt ist aus dem Dihydrogenphosphorsäuremonoester von Methacrylsäure-2-hydroxyethylesterund Gemischen des Dihydrogenphosphorsäuremonoestersvon Methacrylsäure-2-hydroxyethylester und des Phosphorsäurediesters von Methacrylsäure-2-hydroxyethylester.

13. Wäßrige Dispersion nach einem der Ansprüche 9 bis 12, wobei das mindestens eine polymerisierbare dihydrogenphosphatfunktionelle Monomer ausgewählt ist aus Dihydrogenvinylbenzylphosphaten, $CH_2=CCH_3CO_2CH_2CH_2OPO(OH)_2$, $CH_2 = CCH_3CO_2CH_2CH(OPO(OH)_2]CH_3$, $CH_2=CCH_3CO_2CH_2CH_2CH_2OPO(OH)_2$, und $CH_2=CCH_3CO_2CH_2CHOHCH_2OPO(OH)_2$.

14. Pigmentaufschlämmung, umfassend die wäßrige Dispersion von Verbundteilchen, hergestellt durch das Verfahren nach einem der Ansprüche 1 bis 8 oder nach einem der Ansprüche 9 bis 13.

15. Beschichtungszusammensetzung, umfassend die wäßrige Dispersion der durch das Verfahren nach einem der Ansprüche 1 bis 8 oder nach einem der Ansprüche 9 bis 13 hergestellten Verbundteilchen.

**Revendications**

1. Procédé de préparation d'une dispersion aqueuse de particules composites, les particules composites comprenant chacune plusieurs particules de latex polymère sélectionné, adsorbées sur une particule de matériau minéral, le procédé comprenant les étapes consistant à:

   a) disperser les particules de matériau minéral dans un milieu aqueux avec un dispersant de pigment, la granulométrie moyenne des particules minérales étant de 100 à 10 000 nm;
   b) préparer, dans le milieu aqueux, une dispersion ou une suspension de particules de latex polymère sélectionné, ayant une granulométrie moyenne de 20 nm à quatre fois la granulométrie moyenne des particules de matériau minéral et une fonction acide superficielle ayant un pKa intermédiaire entre les acides faibles et les acides forts, et préparées par un procédé de polymérisation en émulsion choisi dans la catérogie composée des:

      1) procédés de polymérisation en émulsion employant un mélange de monomères comprenant au moins un monomère polymérisable à fonctions acide à insaturation éthylénique, choisi dans la catégorie constitué par:

         A) l'acide itaconique; et
         B) les esters dihydrogénophosphates d'un alcool, l'alcool contenant un groupe oléfinique polymérisable;

      2) procédés de polymérisation en émulsion fournissant une fonction acide à proximité de la surface de la particule de latex polymère; et
      3) procédés de polymérisation en émulsion employant un mélange de monomères contenant au moins un monomère à fonction acide à insaturation éthylénique, le poids total du monomère à fonction acide à insaturation éthylénique constituant au moins dix pour cent en poids des matières solides du latex polymère; et

   c) mélanger le milieu aqueux contenant les particules de matériau minéral et les particules de latex polymère sélectionné, les particules de latex polymère sélectionné étant adsorbées sur les particules de matériau minéral pour former des particules composites.

2. Procédé selon la revendication 1, dans lequel l'ester dihydrogénophosphate est choisi parmi le monoester d'acide phosphorique de méthacrylate de 2-hydroxyéthyle, le diester d'acide phosphorique de méthacrylate de 2-hydroxyéthyle, le monoester d'acide phosphorique de méthacrylate de 3-hydroxypropyle ou le diester d'acide phosphorique de méthacrylate de 3-hydroxypropyle.

3. Procédé selon la revendication 2, dans lequel le dispersant de pigment est un polyélectrolyte, de préférence un acide poly(méth)acrylique, des sels d'acide poly(méth)acrylique, des copolymères polyélectrolytes d'acide (méth) acrylique ou des sels de copolymères polyélectrolytes d'acide (méth)acrylique; un polyélectrolyte minéral; ou un sel polyphosphate.

4. Procédé selon l'une quelconque des revendications précédentes, dans lequel le latex polymère sélectionné a une température de transition vitreuse effective supérieure à 20°C, de préférence supérieure à 50°C.

5. Procédé selon l'une quelconque des revendications précédentes, dans lequel la granulométrie moyenne des particules de latex polymère est de la moitié de la granulométrie moyenne des particules de matériau minéral à une valeur égale à la granulométrie moyenne des particules de matériau minéral.

6. Procédé selon l'une quelconque des revendications précédentes, dans lequel la granulométrie moyenne des particules de matériau minéral est de 200 nm à 250 nm, et la granulométrie moyenne des particules de latex polymère est de 20 nm à 5 000 nm, de préférence de 20 nm à 1000 nm, mieux encore de 50 nm à 80 nm.

7. Procédé selon la revendication 1, dans lequel la température de transition vitreuse du latex polymère sélectionné est inférieure à 20°C et la granulométrie moyenne des particules de latex polymère sélectionné est de 80 nm à 600 nm, de préférence de 100 nm à 400 nm.

8. Procédé selon l'une quelconque des revendications précédentes, dans lequel le matériau minéral est le dioxyde de titane.

9. Dispersion aqueuse de particules composites produites par le procédé selon l'une quelconque des revendications précédentes, les particules composites comprenant plusieurs particules de latex polymère adsorbées sur une particule de dioxyde de titane, les particules de latex polymère contenant des groupes fonctionnels ester dihydrogénophosphate.

10. Dispersion aqueuse selon la revendication 9, dans laquelle les particules de latex polymère sont polymérisées à partir d'un monomère contenant au moins un monomère à fonction dihydrogénophosphate polymérisable.

11. Dispersion aqueuse selon la revendication 10, dans laquelle le monomère à fonction dihydrogénophosphate polymérisable, au nombre d'au moins un, est choisi parmi les esters dihydrogénophosphates d'un alcool, l'alcool contenant un groupe polymérisable choisi parmi les groupes vinyliques polymérisablles et les groupes oléfiniques non vinyliques polymérisables.

12. Dispersion aqueuse selon la revendication 11, dans laquelle le monomère à fonction dihydrogénophosphate polymérisable, au nombre d'au moins un, est choisi parmi le monoester dihydrogénophosphate de méthacrylate de 2-hydroxyéthyle et les mélanges de monoester dihydrogénophosphate de méthacrylate de 2-hydroxyéthyle et de diester d'acide phosphorique de méthacrylate de 2-hydroxyéthyle.

13. Dispersion aqueuse selon l'une quelconque des revendications 9-12, dans laquelle le monomère à fonction dihydrogénophosphate polymérisable, au nombre d'au moins un, est choisi parmi les dihydrogénovinylbenzylphos-phates, $CH_2{=}CCH_3CO_2CH_2CH_2OPO(OH)_2$, $CH_2{=}CCH_3CO_2CH_2CH[OPO(OH)_2]CH_3$, $CH_2{=}CCH_3CO_2CH_2CH_2CH_2OPO(OH)_2$ et $CH_2{=}CCH_3CO_2CH_2CHOHCH_2OPO(OH)_2$.

14. Suspension de pigment comprenant la dispersion aqueuse de particules composites produites par le procédé selon l'une quelconque des revendications 1-8 ou revendiquée dans l'une quelconque des revendications 9-13.

15. Composition de revêtement comprenant la dispersion aqueuse de particules composites produites par le procédé selon l'une quelconque des revendications 1-8 ou revendiquée dans l'une quelconque des revendications 9-13.

FIG.1.

FIG. 2.

FIG. 3.

FIG.4a.

FIG.4b.